# EUROPEAN PATENT SPECIFICATION

(11) **EP 3 079 134 B1**
(45) Date of publication and mention of the grant of the patent: **11.12.2019**
(21) Application number: 15002502.1
(22) Date of filing: 24.08.2015
(51) Int. Cl.: G08C 17/02, A63H 27/00, G05D 1/00

(54) **MOBILE TERMINAL AND METHOD FOR CONTROLLING THE SAME**
TRAGBARES ENDGERÄT UND VERFAHREN ZUR STEUERUNG DAVON
TERMINAL MOBILE ET SON PROCÉDÉ DE COMMANDE

(30) Priority: 07.04.2015 KR 20150048865
(43) Date of publication of application: 12.10.2016
(73) Proprietor: LG Electronics Inc., Yeongdeungpo-gu Seoul 150-721 (KR)
(72) Inventor: Yang, Sunho, 137-893 Seoul (KR); Park, Jaehark, 137-893 Seoul (KR); Jeong, Jaewoo, 137-893 Seoul (KR); Cho, Taehoon, 137-893 Seoul (KR); Park, Chansul, 137-893 Seoul (KR)
(74) Representative: Beyer, Andreas

(56) References cited:
- US-A1- 2009 132 100
- US-A1- 2011 090 399
- US-A1- 2013 063 489

## Description

### BACKGROUND OF THE INVENTION

### Field of the Invention

The present invention relates to a mobile terminal enabling a user to more conveniently use the terminal and a method of controlling therefor.

### Discussion of the Related Art

Recently, a drone capable of operating by a person or a company is a growing trend. For instance, the drone corresponds to an unmanned aircraft or an unmanned flying object of a helicopter shape flying by a control signal of a radio wave. Recently, a case of sharing images, which are captured using a camera mounted on the drone while the drone is flying, on the internet is increasing. Yet, in this instance, since the captured images are shared only and information on a flight path of the drone is not shared, a need of a user who wants to directly capture an identical image is not properly reflected.

US-A-2009-0132100 discloses a flight control system for enabling communication between an unmanned aircraft and a terrestrial station. A camera device may be mounted on the unmanned aircraft, and a picture recorded by the camera device can be viewed by an operator at the terrestrial station. In addition, the monitor at the terrestrial station may show a flight trajectory of the aircraft, a viewpoint of the camera and an area recorded by the camera, displayed on a map screen on the monitor as a field of view.

US-A-2011/0090399 relates to a system that can parse both telemetry data and corresponding encoded video data. The telemetry data and the video data are originally unsynchronized and the data for each is acquired by a separate device. The system receives the telemetry data stream or file and the encoded video data stream or file and outputs a series of synchronized video images with telemetry data. Thus, there is telemetry information associated with each video image.

US-A-2013/0063489 discloses a geospatial multiviewer, which can include a geospatial application that provides geospatial data responsive to a user input, the geospatial data corresponding to a representation of at least one geographical region. A request engine is configured to provide a search query for requesting content from at least one data source. The search query is based at least in part on the geospatial data from the geospatial application. A graphics pipeline is configured to dynamically generate at least one transformation for adjusting objects in an output presentation in response to the user input. The output presentation is rendered based on the at least one transformation. The objects in the output presentation comprise received content and the representation of at least one geographical region.

### SUMMARY OF THE INVENTION

Accordingly, an object of the present invention is to address the above-noted and other problems. Thereto, a mobile terminal according to independent claim 1 and a method according to independent claim 13 are provided. Favourable embodiments are defined in the dependent claims.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one example, a mobile terminal includes a wireless communication unit configured to transceive data with a drone via wireless communication, a memory configured to store data received from the drone, a location information collecting unit configured to collect location information of the mobile terminal and a controller, the controller configured to control the wireless communication unit to receive image data captured by a camera of the drone and sensing data corresponding to the drone and the camera of the drone obtained by a sensing unit of the drone from the drone, the controller configured to obtain capturing information corresponding to the captured image data based on the collected location information of the mobile terminal and the received sensing data. In this instance, the capturing information includes flight information corresponding to a flight path of the drone and camera motion information corresponding to a motion of the camera of the drone.

To further achieve these objects and other advantages and in accordance with the purpose of the invention, as embodied and broadly described herein, according to another example, a method of controlling a mobile terminal includes the steps of outputting a search result of an image file corresponding to a specific region or a specific place name on a display unit (the image file includes image data captured by a drone and capturing information corresponding to the captured image data and the search result is provided by an external server), detecting a command for selecting capturing information of a specific image file from among the output search result, downloading the capturing information selected by the command from the external server, and storing the downloaded capturing information in a memory. In this instance, the capturing information includes flight information corresponding to a flight path of the drone and camera motion information corresponding to a motion of the camera of the drone.

Further scope of applicability of the present invention will become apparent from the detailed description given hereinafter. However, it should be understood that the detailed description and specific examples, while indicating preferred embodiments of the invention, are given by illustration only, since various changes and modifications within the scope of the invention will become apparent to those skilled in the art from this detailed description.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 2 is a conceptual view of a deformable mobile terminal according to an alternative embodiment of the present disclosure;
FIG. 3 is a conceptual view of a wearable mobile terminal according to another alternative embodiment of the present disclosure;
FIG. 4 is a conceptual view of a wearable mobile terminal according to another alternative embodiment of the present disclosure;
FIG. 5 is a diagram illustrating an example of an exterior of a drone controlled by a mobile terminal according to one embodiment of the present invention;
FIG. 6 is a block diagram illustrating an example of configuration modules of a drone according to one embodiment of the present invention;
FIG. 7 is a flowchart illustrating an example of a method for a mobile terminal to obtain capturing information according to one embodiment of the present invention in case of capturing an image using a drone;
FIG. 8 is a diagram illustrating explaining an example of capturing information obtained by a mobile terminal according to one embodiment of the present invention in case of capturing an image using a drone;
FIG. 9 is a diagram illustrating explaining an example of a method of identifying a position of a drone among capturing information obtained by a mobile terminal according to one embodiment of the present invention in case of capturing an image using the drone;
FIG. 10 is a diagram illustrating explaining an example of a method of identifying a movement of a camera among capturing information obtained by a mobile terminal according to one embodiment of the present invention in case of capturing an image using a drone;
FIG. 11 is a diagram illustrating explaining a different example of a method of identifying a movement of a camera among capturing information obtained by a mobile terminal according to one embodiment of the present invention in case of capturing an image using a drone;
FIG. 12 is a diagram illustrating explaining a further different example of a method of identifying a movement of a camera among capturing information obtained by a mobile terminal according to one embodiment of the present invention in case of capturing an image using a drone;
FIGS. 13 and 14 are diagrams illustrating explaining an example of capturing information obtained by a mobile terminal according to one embodiment of the present invention in case of capturing an image using a drone;
FIG. 15 is a diagram illustrating explaining an example of a method for a mobile terminal to store capturing information corresponding to an image data captured by a drone according to one embodiment of the present invention;
FIG. 16 is a diagram illustrating explaining an example of a method for a mobile terminal to edit and store capturing information corresponding to an image data captured by a drone according to one embodiment of the present invention;
FIG. 17 is a diagram illustrating explaining a different example of a method for a mobile terminal to edit and store capturing information corresponding to an image data captured by a drone according to one embodiment of the present invention;
FIG. 18 is a diagram illustrating explaining a further different example of a method for a mobile terminal to edit and store capturing information corresponding to an image data captured by a drone according to one embodiment of the present invention;
FIG. 19 is a diagram illustrating explaining a further different example of a method for a mobile terminal to edit and store capturing information corresponding to an image data captured by a drone according to one embodiment of the present invention;
FIG. 20 is a diagram illustrating explaining an example of a method for a mobile terminal to share an image data and capturing information stored in a memory with an external device or an external server according to one embodiment of the present invention;
FIG. 21 is a diagram illustrating explaining a different example of a method for a mobile terminal to share an image data and capturing information stored in a memory with an external device or an external server according to one embodiment of the present invention;
FIG. 22 is a diagram illustrating explaining a further different example of a method for a mobile terminal to share an image data and capturing information stored in a memory with an external device or an external server according to one embodiment of the present invention;
FIG. 23 is a diagram illustrating explaining a further different example of a method for a mobile terminal to share an image data and capturing information stored in a memory with an external device or an external server according to one embodiment of the present invention;
FIG. 24 is a diagram illustrating explaining a further different example of a method for a mobile terminal to share an image data and capturing information stored in a memory with an external device or an external server according to one embodiment of the present invention;
FIG. 25 is a diagram illustrating explaining an example of a method for a mobile terminal to download capturing information of an image uploaded to an external server according to one embodiment of the present invention;
FIG. 26 is a diagram illustrating explaining an example of a method for a mobile terminal to provide a search result of an image captured by a drone and download capturing information of a specific image according to one embodiment of the present invention;
FIG. 27 is a diagram illustrating explaining a different example of a method for a mobile terminal to provide a search result of an image captured by a drone and download capturing information of a specific image according to one embodiment of the present invention;
FIG. 28 is a diagram illustrating explaining an example of a method for a mobile terminal to provide a search result of images captured by a drone according to one embodiment of the present invention;
FIG. 29 is a diagram illustrating explaining an example of a method for a mobile terminal to provide a search result of images captured by a drone according to one embodiment of the present invention;
FIG. 30 is a diagram illustrating explaining an example of a method for a mobile terminal to provide a search result of images captured by a drone according to one embodiment of the present invention;
FIG. 31 is a diagram illustrating explaining an example of a method for a mobile terminal to provide a search result of images captured by a drone according to one embodiment of the present invention;
FIG. 32 is a diagram illustrating explaining an example of a method for a mobile terminal to provide a search result of images captured by a drone according to one embodiment of the present invention;
FIG. 33 is a diagram illustrating explaining an example of a method for a mobile terminal to edit capturing information according to one embodiment of the present invention;
FIG. 34 is a diagram illustrating explaining an example of a method for a mobile terminal to edit capturing information according to one embodiment of the present invention;
FIG. 35 is a diagram illustrating explaining an example of a method for a mobile terminal to edit capturing information according to one embodiment of the present invention;
FIG. 36 is a diagram illustrating explaining an example of a method for a mobile terminal to edit capturing information according to one embodiment of the present invention. Explanation on contents overlapped with what is mentioned earlier in FIG. 33 is omitted at this time;
FIG. 37 is a diagram illustrating explaining an example of a method for a mobile terminal to edit capturing information according to one embodiment of the present invention;
FIG. 38 is a diagram illustrating explaining an example of a method for a mobile terminal to control a drone based on capturing information stored in a memory according to one embodiment of the present invention;
FIG. 39 is a diagram illustrating explaining an example of a method for a mobile terminal to control a drone based on capturing information stored in a memory according to one embodiment of the present invention;
FIG. 40 is a diagram illustrating explaining an example of a message output on a mobile terminal in accordance with a command for configuring a path of a drone according to one embodiment of the present invention;
FIG. 41 to FIG. 42 are diagrams illustrating explaining an example of a different method for a mobile terminal to provide a search result of an image captured by a drone according to one embodiment of the present invention; and
FIG. 43 is a diagram illustrating explaining a different example of a different method for a mobile terminal to provide a search result of an image captured by a drone according to one embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

Although the terms first, second, etc. may be used herein to describe various elements, these elements should not be limited by these terms. These terms are generally only used to distinguish one element from another. When an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

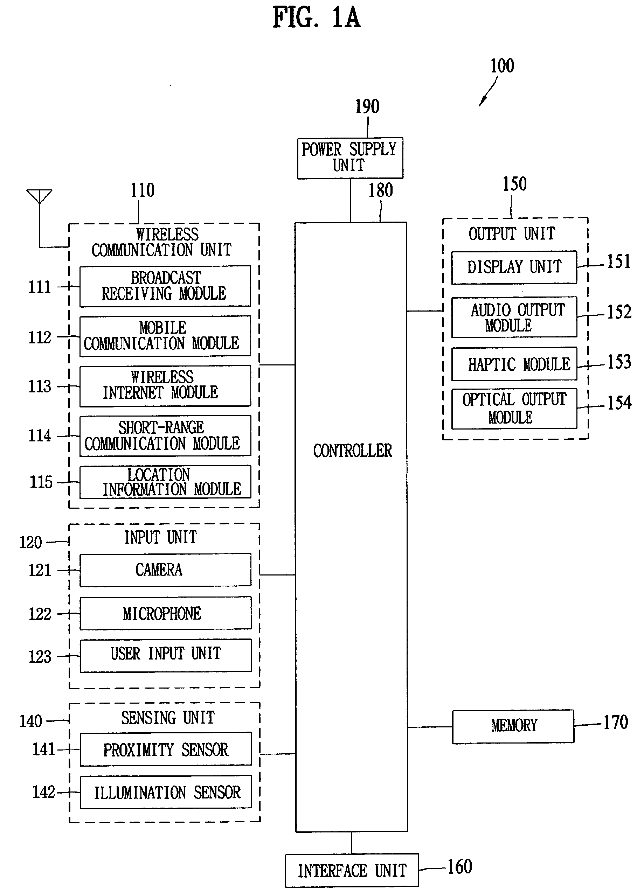

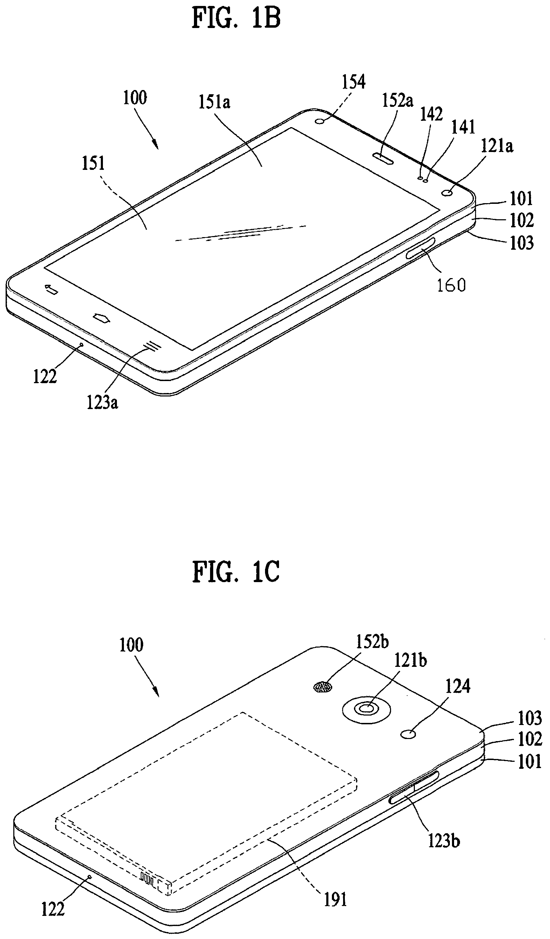

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions. The mobile terminal 100 is shown having components such as a wireless communication unit 110, an input unit 120, a sensing unit 140, an output unit 150, an interface unit 160, a memory 170, a controller 180, and a power supply unit 190. Implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154. The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 can provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.
system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this instance, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000 (Code Division Multi Access 2000), EV-DO (Enhanced Voice-Data Optimized or Enhanced Voice-Data Only), Wideband CDMA (WCDMA), High Speed Downlink Packet access (HSDPA), HSUPA (High Speed Uplink Packet Access), Long Term Evolution (LTE), LTE-A (Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which can exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal. As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. Further, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this instance, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others. As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 can sense which region of the display unit 151 has been touched. Here, the touch controller may be a component separate from the controller 180, the controller 180, and combinations thereof.

In some embodiments, the controller 180 can execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor. Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information. In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like. The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like. A signal output by the optical output module 154 may be implemented so the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen. The memory 170 may include one or more types of storage mediums including a Flash memory, a hard disk, a solid state disk, a silicon disk, a multimedia card micro type, a card-type memory (e.g., SD or DX memory, etc.), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 can typically control the general operations of the mobile terminal 100. For example, the controller 180 can set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging. The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance. Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101. In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel, (STS), aluminum (Al), titanium (Ti), or the like. As an alternative to the example in which the plurality of cases form an inner space for accommodating components, the mobile terminal 100 may be configured such that one case forms the inner space. In this example, a mobile terminal 100 having a uni-body is formed so synthetic resin or metal extends from a side surface to a rear surface.

If desired, the mobile terminal 100 may include a waterproofing unit for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces. The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a. The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this instance, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof. Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen. As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject. As shown in FIG. 1C, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

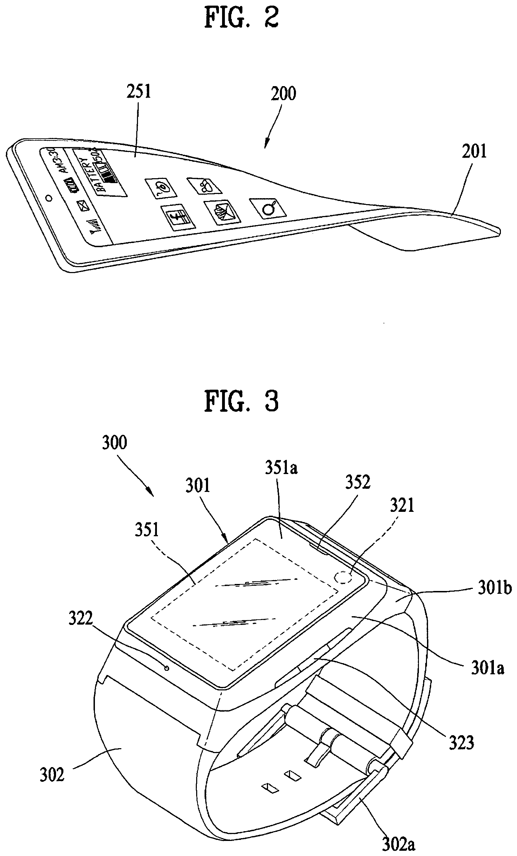

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C .

The flexible display of mobile terminal 200 is generally formed as a lightweight, non-fragile display, which still exhibits characteristics of a conventional flat panel display, but is instead fabricated on a flexible substrate which can be deformed as noted previously. The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When the flexible display unit 251 is not deformed (for example, in a state with an infinite radius of curvature and referred to as a first state), a display region of the flexible display unit 251 includes a generally flat surface. When the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized so a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state(or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140. The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251. A battery located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like. In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 can transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C .

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion electrically connected to the antenna to extend a ground area. The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

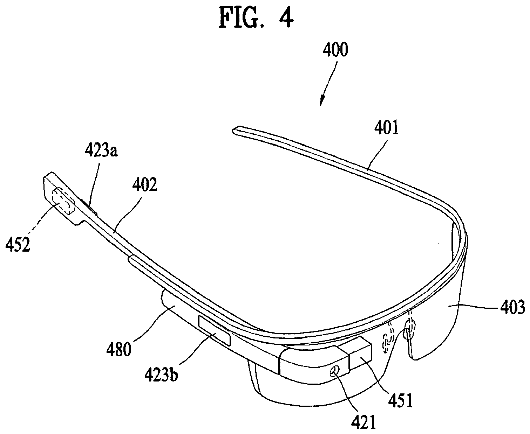

FIG. 4 is a perspective view illustrating one example of a glass-type mobile terminal 400 according to another exemplary embodiment. The glass-type mobile terminal 400 can be wearable on a head of a human body and provided with a frame (case, housing, etc.) therefor. The frame may be made of a flexible material to be easily worn. The frame of mobile terminal 400 is shown having a first frame 401 and a second frame 402, which can be made of the same or different materials. In general, mobile terminal 400 may be configured to include features that are the same or similar to that of mobile terminal 100 of FIGS. 1A-1C.

The frame may be supported on the head and defines a space for mounting various components. As illustrated, electronic components, such as a control module 480, an audio output module 452, and the like, may be mounted to the frame part. Also, a lens 403 for covering either or both of the left and right eyes may be detachably coupled to the frame part.

The control module 480 controls various electronic components disposed in the mobile terminal 400. The control module 480 may be understood as a component corresponding to the aforementioned controller 180. FIG. 4 illustrates that the control module 480 is installed in the frame part on one side of the head, but other locations are possible.

The display unit 451 may be implemented as a head mounted display (HMD). The HMD refers to display techniques by which a display is mounted to a head to show an image directly in front of a user's eyes. In order to provide an image directly in front of the user's eyes when the user wears the glass-type mobile terminal 400, the display unit 451 may be located to correspond to either or both of the left and right eyes. FIG. 4 illustrates that the display unit 451 is located on a portion corresponding to the right eye to output an image viewable by the user's right eye.

The display unit 451 may project an image into the user's eye using a prism. Also, the prism may be formed from optically transparent material such that the user can view both the projected image and a general visual field (a range that the user views through the eyes) in front of the user. In such a manner, the image output through the display unit 451 may be viewed while overlapping with the general visual field. The mobile terminal 400 may provide an augmented reality (AR) by overlaying a virtual image on a realistic image or background using the display.

The camera 421 may be located adjacent to either or both of the left and right eyes to capture an image. Since the camera 421 is located adjacent to the eye, the camera 421 can acquire a scene that the user is currently viewing. The camera 421 may be positioned at most any location of the mobile terminal. In some embodiments, multiple cameras 421 may be utilized. Such multiple cameras 421 may be used to acquire a stereoscopic image.

The glass-type mobile terminal 400 may include user input units 423a and 423b, which can each be manipulated by the user to provide an input. The user input units 423a and 423b may employ techniques which permit input via a tactile input. Typical tactile inputs include a touch, push, or the like. The user input units 423a and 423b are shown operable in a pushing manner and a touching manner as they are located on the frame part and the control module 480, respectively.

If desired, mobile terminal 400 may include a microphone which processes input sound into electric audio data, and an audio output module 452 for outputting audio. The audio output module 452 may be configured to produce audio in a general audio output manner or an osteoconductive manner. When the audio output module 452 is implemented in the osteoconductive manner, the audio output module 452 may be closely adhered to the head when the user wears the mobile terminal 400 and vibrate the user's skull to transfer sounds.

A communication system which is operable with the variously described mobile terminals will now be described in more detail. Such a communication system may be configured to utilize any of a variety of different air interfaces and/or physical layers. Examples of such air interfaces utilized by the communication system include Frequency Division Multiple Access (FDMA), Time Division Multiple Access (TDMA), Code Division Multiple Access (CDMA), Universal Mobile Telecommunications System (UMTS) (including, Long Term Evolution (LTE), LTE-A (Long Term Evolution-Advanced)), Global System for Mobile Communications (GSM), and the like.

By way of a non-limiting example only, further description will relate to a CDMA communication system, but such teachings apply equally to other system types including a CDMA wireless communication system as well as OFDM (Orthogonal Frequency Division Multiplexing) wireless communication system. A CDMA wireless communication system generally includes one or more mobile terminals (MT or User Equipment, UE) 100, one or more base stations (BSs, NodeB, or evolved NodeB), one or more base station controllers (BSCs), and a mobile switching center (MSC). The MSC is configured to interface with a conventional Public Switched Telephone Network (PSTN) and the BSCs. The BSCs are coupled to the base stations via backhaul lines. The backhaul lines may be configured in accordance with any of several known interfaces including, for example, E1/T1, ATM, IP, PPP, Frame Relay, HDSL, ADSL, or xDSL. Hence, the plurality of BSCs can be included in the CDMA wireless communication system.

Each base station may include one or more sectors, each sector having an omnidirectional antenna or an antenna pointed in a particular direction radially away from the base station. Alternatively, each sector may include two or more different antennas. Each base station may be configured to support a plurality of frequency assignments, with each frequency assignment having a particular spectrum (e.g., 1.25 MHz, 5 MHz, etc.).

The intersection of sector and frequency assignment may be referred to as a CDMA channel. The base stations may also be referred to as Base Station Transceiver Subsystems (BTSs). In some cases, the term "base station" may be used to refer collectively to a BSC, and one or more base stations. The base stations may also be denoted as "cell sites." Alternatively, individual sectors of a given base station may be referred to as cell sites.

A broadcasting transmitter (BT) transmits a broadcast signal to the mobile terminals 100 operating within the system. The broadcast receiving module 111 of FIG. 1A is typically configured inside the mobile terminal 100 to receive broadcast signals transmitted by the BT.

Global Positioning System (GPS) satellites for locating the position of the mobile terminal 100, for example, may cooperate with the CDMA wireless communication system. Useful position information may be obtained with greater or fewer satellites than two satellites. It is to be appreciated that other types of position detection technology, (i.e., location technology that may be used in addition to or instead of GPS location technology) may alternatively be implemented. If desired, at least one of the GPS satellites may alternatively or additionally be configured to provide satellite DMB transmissions.

The location information module 115 is generally configured to detect, calculate, or otherwise identify a position of the mobile terminal. As an example, the location information module 115 may include a Global Position System (GPS) module, a Wi-Fi module, or both. If desired, the location information module 115 may alternatively or additionally function with any of the other modules of the wireless communication unit 110 to obtain data related to the position of the mobile terminal.

A typical GPS module 115 can measure an accurate time and distance from three or more satellites, and accurately calculate a current location of the mobile terminal according to trigonometry based on the measured time and distances. A method of acquiring distance and time information from three satellites and performing error correction with a single satellite may be used. In particular, the GPS module may acquire an accurate time together with three-dimensional speed information as well as the location of the latitude, longitude and altitude values from the location information received from the satellites.

Furthermore, the GPS module can acquire speed information in real time to calculate a current position. Sometimes, accuracy of a measured position may be compromised when the mobile terminal is located in a blind spot of satellite signals, such as being located in an indoor space. In order to minimize the effect of such blind spots, an alternative or supplemental location technique, such as Wi-Fi Positioning System (WPS), may be utilized.

The Wi-Fi positioning system (WPS) refers to a location determination technology based on a wireless local area network (WLAN) using Wi-Fi as a technology for tracking the location of the mobile terminal 100. This technology typically includes the use of a Wi-Fi module in the mobile terminal 100 and a wireless access point for communicating with the Wi-Fi module. The Wi-Fi positioning system may include a Wi-Fi location determination server, a mobile terminal, a wireless access point (AP) connected to the mobile terminal, and a database stored with wireless AP information.

The mobile terminal connected to the wireless AP may transmit a location information request message to the Wi-Fi location determination server. The Wi-Fi location determination server extracts the information of the wireless AP connected to the mobile terminal 100, based on the location information request message (or signal) of the mobile terminal 100. The information of the wireless AP may be transmitted to the Wi-Fi location determination server through the mobile terminal 100, or may be transmitted to the Wi-Fi location determination server from the wireless AP.

The information of the wireless AP extracted based on the location information request message of the mobile terminal 100 may include one or more of media access control (MAC) address, service set identification (SSID), received signal strength indicator (RSSI), reference signal received Power(RSRP), reference signal received quality(RSRQ), channel information, privacy, network type, signal strength, noise strength, and the like.

The Wi-Fi location determination server may receive the information of the wireless AP connected to the mobile terminal 100 as described above, and may extract wireless AP information corresponding to the wireless AP connected to the mobile terminal from the pre-established database. The information of any wireless APs stored in the database may be information such as MAC address, SSID, RSSI, channel information, privacy, network type, latitude and longitude coordinate, building at which the wireless AP is located, floor number, detailed indoor location information (GPS coordinate available), AP owner's address, phone number, and the like. In order to remove wireless APs provided using a mobile AP or an illegal MAC address during a location determining process, the Wi-Fi location determination server may extract only a predetermined number of wireless AP information in order of high RSSI. Then, the Wi-Fi location determination server may extract (analyze) location information of the mobile terminal 100 using at least one wireless AP information extracted from the database.

A method for extracting (analyzing) location information of the mobile terminal 100 may include a Cell-ID method, a fingerprint method, a trigonometry method, a landmark method, and the like. The Cell-ID method is used to determine a position of a wireless AP having the largest signal strength, among peripheral wireless AP information collected by a mobile terminal, as a position of the mobile terminal. The Cell-ID method is an implementation that is minimally complex, does not require additional costs, and location information can be rapidly acquired. However, in the Cell-ID method, the precision of positioning may fall below a desired threshold when the installation density of wireless APs is low.

The fingerprint method is used to collect signal strength information by selecting a reference position from a service area, and to track a position of a mobile terminal using the signal strength information transmitted from the mobile terminal based on the collected information. In order to use the fingerprint method, it is common for the characteristics of radio signals to be pre-stored in the form of a database.

The trigonometry method is used to calculate a position of a mobile terminal based on a distance between coordinates of at least three wireless APs and the mobile terminal. In order to measure the distance between the mobile terminal and the wireless APs, signal strength may be converted into distance information, Time of Arrival (ToA), Time Difference of Arrival (TDoA), Angle of Arrival (AoA), or the like may be taken for transmitted wireless signals.

The landmark method is used to measure a position of a mobile terminal using a known landmark transmitter. In addition to these position location methods, various algorithms may be used to extract (analyze) location information of a mobile terminal. Such extracted location information may be transmitted to the mobile terminal 100 through the Wi-Fi location determination server, thereby acquiring location information of the mobile terminal 100.

The mobile terminal 100 can acquire location information by being connected to at least one wireless AP. The number of wireless APs required to acquire location information of the mobile terminal 100 may be variously changed according to a wireless communication environment within which the mobile terminal 100 is positioned.

As previously described with regard to FIG. 1A, the mobile terminal may be configured to include short-range communication techniques such as Bluetooth™, Radio Frequency Identification (RFID), Infrared Data Association (IrDA), Ultra Wideband (UWB), ZigBee, Near Field Communication (NFC), Wireless USB (Wireless Universal Serial Bus), and the like.

A typical NFC module provided at the mobile terminal supports short-range wireless communication, which is a non-contactable type of communication between mobile terminals and generally occurs within about 10 cm. The NFC module may operate in one of a card mode, a reader mode, or a P2P mode. The mobile terminal 100 may further include a security module for storing card information, in order to operate the NFC module in a card mode. The security module may be a physical medium such as Universal Integrated Circuit Card (UICC) (e.g., a Subscriber Identification Module (SIM) or Universal SIM (USIM)), a secure micro SD and a sticker, or a logical medium (e.g., embedded Secure Element (SE)) embedded in the mobile terminal. Single Wire Protocol (SWP)-based data exchange may be performed between the NFC module and the security module.

When the NFC module operates in a card mode, the mobile terminal may transmit card information on a general IC card to the outside. More specifically, if a mobile terminal having card information on a payment card (e.g, a credit card or a bus card) approaches a card reader, a short-range mobile payment may be executed. As another example, if a mobile terminal which stores card information on an entrance card approaches an entrance card reader, an entrance approval procedure may start. A card such as a credit card, a traffic card, or an entrance card may be included in the security module in the form of applet, and the security module may store card information on the card mounted therein. Card information for a payment card may include any of a card number, a remaining amount and usage history, and the like. Card information of an entrance card may include any of a user's name, a user's number (e.g., undergraduate number or staff number), an entrance history, and the like.

When the NFC module operates in a reader mode, the mobile terminal can read data from an external tag. The data received from the external tag by the mobile terminal may be coded into the NFC Data Exchange Format defined by the NFC Forum. The NFC Forum generally defines four record types. More specifically, the NFC Forum defines four Record Type Definitions (RTDs) such as smart poster, text, Uniform Resource Identifier (URI), and general control. If the data received from the external tag is a smart poster type, the controller may execute a browser (e.g., Internet browser). If the data received from the external tag is a text type, the controller may execute a text viewer. If the data received from the external tag is a URI type, the controller may execute a browser or originate a call. If the data received from the external tag is a general control type, the controller may execute a proper operation according to control content.

In some cases in which the NFC module operates in a P2P(Peer-to-Peer) mode, the mobile terminal can execute P2P communication with another mobile terminal. In this instance, Logical Link Control Protocol (LLCP) may be applied to the P2P communication. For P2P communication, connection may be generated between the mobile terminal and another mobile terminal. This connection may be categorized as a connectionless mode which ends after one packet is switched, and a connection-oriented mode in which packets are switched consecutively. For a typical P2P communication, data such as an electronic type name card, address information, a digital photo and a URL, a setup parameter for Bluetooth connection, Wi-Fi connection, etc. may be switched. The P2P mode can be effectively utilized in switching data of a small capacity, because an available distance for NFC communication is relatively short.

Further preferred embodiments will be described in more detail with reference to additional drawing figures. It is understood by those skilled in the art that the present features can be embodied in several forms without departing from the characteristics thereof.

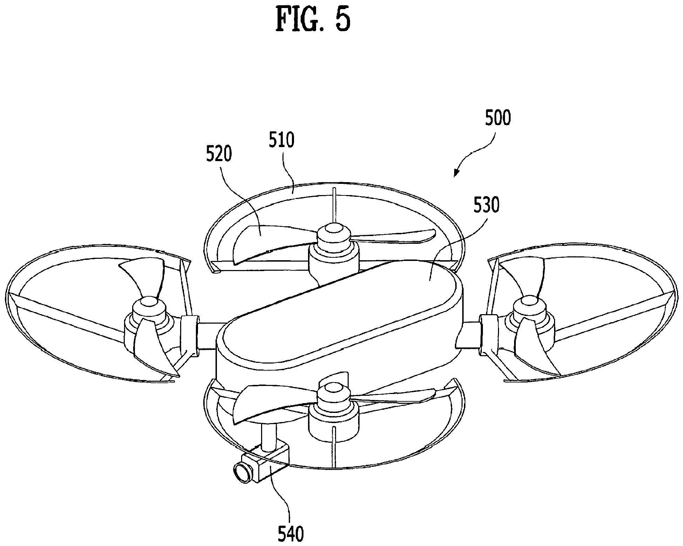

In the following, a mobile terminal configured to utilize capturing information of a drone and a method of controlling therefor are explained in detail with reference to FIG. 5 to FIG. 43. Yet, it is apparent that those who skilled in the art can complementally interpret FIG. 5 to FIG. 43 and modify embodiments with reference to FIG. 1 to FIG. 4 described in the foregoing description.

FIG. 5 is a diagram illustrating an example of an exterior of a drone controlled by a mobile terminal according to one embodiment of the present invention. Referring to FIG. 5, a drone 500 can include a propeller guard 510, a propeller 520, a main body 530, a camera 540 and the like. Yet, a scope of the present invention is not limited by a shape of the drone 500 shown in FIG. 5. In particular, the present invention can be applied to various helicopter forms or drones of an aircraft form including a tricopter using 3 propellers, a quadcopter using 4 propellers shown in FIG. 5, an octacopter using 8 propellers and the like.

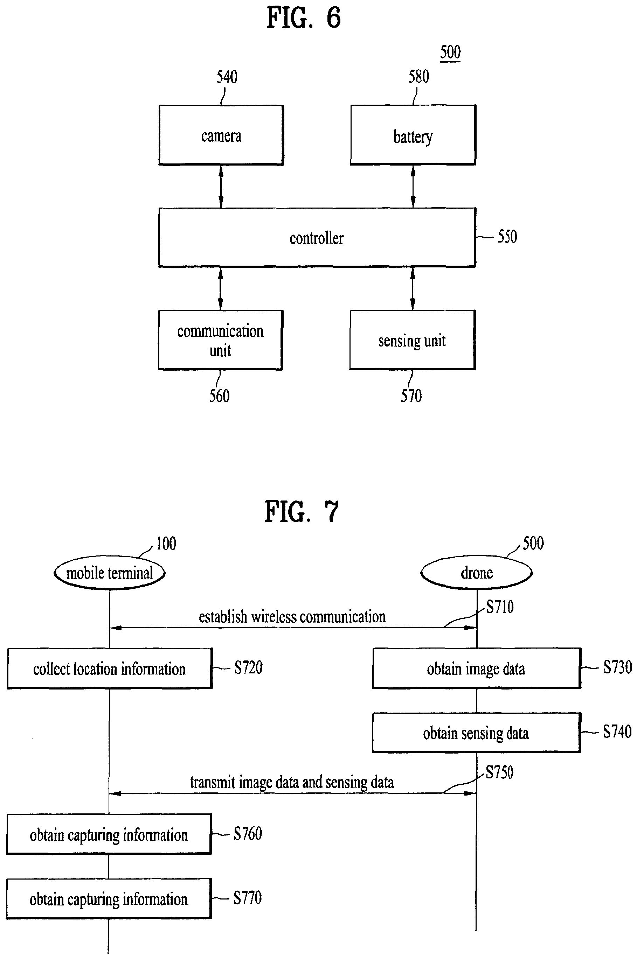

The propeller guard 510 is a configuration configured to prevent a person or an animal from being harmed due to an operation of the propeller 520. The propeller guard can be omitted. The propeller 520 and the camera 540 operate in response to a control signal of the main body 530 and the main body 530 includes a wireless communication module capable of communicating with a mobile terminal. Depending on an embodiment, a minute motion of the camera 540 can be controlled by a separate control signal different from the control signal of the main body 530. Regarding a configuration of the drone 500, it shall be explained in more detail with reference to FIG. 6 in the following.

FIG. 6 is a block diagram illustrating an example of configuration modules of a drone according to one embodiment of the present invention. Refer to FIG. 6, the drone 500 can include the camera 540, a controller 550, a communication unit 560, a sensing unit 570, a battery 580 and the like. Yet, the aforementioned configuration is not a mandatory. Hence, the drone 500 may include configuration elements more of less than the aforementioned configuration. One configuration element shown in FIG. 6 can be implemented by two or more configuration elements or two or more configuration elements shown in FIG. 6 can be implemented by one configuration element.

The camera 540 can obtain a still image or a video according to a control signal of the controller 550. The control signal of the controller 550 configured to control the camera 540 may correspond to a signal transmitted from a mobile terminal 100 via the communication unit 560. The camera 540 can be fixed to make no movement, can be designed to move a prescribed angle on a plane formed by x-y axis (including a plane parallel to the plane formed by the x-y axis) or can be designed to move a prescribed angle on a plane formed by a z axis (including a plane parallel to the plane formed by the z axis). Depending on an embodiment, the camera 540 can be control to face a direction different from a direction at which the drone 500 is facing. For instance, if the drone 500 is flying toward a northbound based on a geomagnetic field, the camera 540 may face a direction rather than the northbound based on the geomagnetic field. And, depending on an embodiment, the camera 540 can be controlled by a camera controller included in the controller 550 or a camera controller implemented irrespective of the controller.

The communication unit 560 is designed to transceive data with the wireless communication unit 110 of the mobile terminal 100 via wireless communication. In this instance, the wireless communication unit 110 of the mobile terminal 100 may correspond to at least one of the mobile communication module 112, the wireless internet module 113 and the short-range communication module 114. The communication unit 560 can receive a signal necessary for controlling the drone 500 from the mobile terminal 100, transmit an image data captured by the camera 540 to the mobile terminal 100 and can transmit a sensing date obtained by the sensing unit 570 to the mobile terminal 100.

According to an embodiment, the communication unit 560 can receive a signal from a predetermined external device except the mobile terminal 100. For instance, the external device may correspond to a beacon. The beacon corresponds to a Bluetooth 4.0 protocol-based short range wireless communication device. The communication unit 560 can identify a position of the beacon using a signal transmitted from the external beacon. Hence, if a user possesses the beacon, the drone 500 can accurately identify a position of the user. In particular, this is especially useful when the drone 500 intends to capture a user possessing the beacon while following the user.

The sensing unit 570 can include at least one or more sensors to sense location information of the drone 500. And, the sensing unit 570 can include at least one or more sensors to sense status information of the drone 500, specifically, status information of the camera 540 included in the drone 500. For instance, the status information of the camera 540 can include direction information of the camera 540. Depending on embodiment, the sensing unit 570 can include at least one or more sensors to sense information on environment surrounding the drone 500. For instance, the sensing unit 570 can include at least one of a GPS sensor, a geomagnetic field sensor, an acceleration sensor, a magnetic sensor, a G-sensor, a gyroscope sensor, a motion sensor, an altitude sensor, a barometric sensor, and a temperature sensor.

The controller 550 can transmit a sensed data obtained by the sensing unit 570 to the mobile terminal 100 via the communication unit 560. Depending on embodiment, the controller 550 can transmit data sensed by two or more sensors included in the sensing unit 570 by combining the data with each other to the mobile terminal 100 via the communication unit 560.

And, the sensing unit 570 can include a ultrasonic sensor, an infrared sensor and the like and may be then able to prevent the drone 500 being collided with a surrounding object. The battery 580 can supply power necessary for operation of each configuration element. The battery 580 can be designed to be rechargeable. The controller 550 performs a role of controlling an operation of each configuration element.

In the following, examples of a method for a mobile terminal according to one embodiment of the present invention to obtain capturing information in case of capturing an image using a drone and a method of utilizing the obtained capturing information are explained with reference to FIG. 7 to FIG. 43. In particular, FIG. 7 is a flowchart illustrating an example of a method for a mobile terminal to obtain capturing information according to one embodiment of the present invention in case of capturing an image using a drone.

First of all, a wireless communication is established between a mobile terminal 100 and a drone 500 (S710). A user can control the drone 500 using the mobile terminal 100. For instance, the user can control a movement of the drone 500 using the mobile terminal 100, control a movement of the camera 540 of the drone 500 using the mobile terminal 100, and can control image acquisition of the camera 540 of the drone 500 using the mobile terminal 100. The controller 180 of the mobile terminal 100 can transmit a signal necessary for controlling the drone 500 to the drone 500 via the wireless communication unit 110. In the present embodiment, assume that the drone 500, which is connected with the mobile terminal 100 via the wireless communication, captures an image using the camera 540 while flying.

The controller 180 of the mobile terminal 100 collects location information of the mobile terminal (S720). The controller 180 can collect the location information of the mobile terminal 100 using at least one of a location information module 115 and the sensing unit 140. For clarity, the location information module 115 and the sensing unit 140 for collecting the location information of the mobile terminal 100 can be commonly called a location information collecting unit.

For instance, the location information of the mobile terminal 100 can include at least one of information indicating a location at which the mobile terminal 100 is positioned, a GPS coordinate information of the mobile terminal 100, latitude and longitude information corresponding to a position of the mobile terminal 100, altitude information corresponding to a position of the mobile terminal 100, information on a slope of the mobile terminal 100 indicating the extent of inclination in a horizontal/vertical direction based on a front side of the display unit 151, oriental information of the mobile terminal 100 based on a geomagnetic field, and rotation information of the mobile terminal 100.

The controller 180 can collect the location information of the mobile terminal 100 on a specific time or can collect the location information of the mobile terminal 100 in every predetermined time interval. In the former case, for instance, the controller 180 can collect the location information of the mobile terminal 100 on timing that the drone 500 starts to fly, timing that the camera 540 of the drone starts to capture image, timing that the drone 500 switches a flying direction and the like.

Meanwhile, the controller 550 of the drone 500 obtains an image data using the camera 540 (S730). An operation of the camera 540 and a movement of the camera 540 can be controlled by the controller 550 based on a signal transmitted from the mobile terminal 100 via the communication unit 560. Depending on embodiment, if a buffer exists in the drone 500, the controller 550 can store the obtained image data in the buffer.

Subsequently, the controller 550 of the drone 500 obtains a sensing data using the sensing unit 570 (S740). For instance, the sensing data can include at least one of information indicating a location at which the drone 500 is positioned, a GPS coordinate information of the drone 500, latitude and longitude information corresponding to a position of the drone 500, altitude information corresponding to a position of the drone 500, oriental information of the drone 500 based on a geomagnetic field, information on a slope of the drone 500 indicating the extent of inclination in a horizontal/vertical direction, oriental information of the camera 540 based on a geomagnetic field, horizontal angle information of the camera 540 on a plane formed by x-y axis based on a front direction of the drone 500, vertical angle information of the camera 540 based on a sea level and vertical angle information of the camera 540 on a z axis based on a plane including a length direction of the main body 530 of the drone 500.

The controller 550 of the drone 500 can periodically or aperiodically obtain a sensing data while the drone 500 is flying or capturing an image. In the latter case, for instance, if a value of specific information included in the sensing data varies more than a predetermined criterion, the controller 550 of the drone 500 can obtain a sensing data. Depending on embodiment, if a buffer exists in the drone 500, the controller 550 can store the obtained sensing data in the buffer.

The controller 550 of the drone 500 transmits the obtained image data and the sensing data to the mobile terminal 100 via the communication unit 560 (S750). The controller 550 can transmit the obtained image data and the sensing data to the mobile terminal 100 in real time or can transmit the obtained image data and the sensing data to the mobile terminal 100 when data are accumulated in the buffer more than a predetermined extent.

Depending on embodiment, if a user possesses the aforementioned beacon and the drone 500 captures an image by following a position of the user (i.e., a position of the beacon) based on a signal transmitted from the beacon, the controller 550 of the drone 500 can also transmit data based on the signal received from the beacon to the mobile terminal 100.

The controller 180 of the mobile terminal 100 receives the image data and the sensing data transmitted from the drone 500 via the wireless communication unit 110 and obtains capturing information corresponding to the received image data based on the received sensing data and the collected location information of the mobile terminal 100 (S760). The controller 180 of the mobile terminal 100 can periodically or aperiodically obtain the capturing information from flying start timing of the drone 500 to flying end timing of the drone 500.

The obtained capturing information corresponds to information indicating how to capture the image data by the drone 500. The obtained capturing data can include flight information corresponding to a flight path of the drone 500 and camera movement information corresponding to a movement of the camera 540 of the drone 500. Depending on embodiment, if the camera 540 is fixed on the drone 500 in order to make the camera 540 to be immobilized, the capturing information may not include the camera movement information corresponding to the movement of the camera 540.

Depending on embodiment, if a user possesses the aforementioned beacon and the drone 500 captures an image by following a position of the user (i.e., a position of the beacon) based on a signal transmitted from the beacon, data based on the signal of the beacon transmitted from the drone 500 and flight information corresponding to a beacon-based flight path can be included in the capturing information as well.

The flight information can include at least one of absolute location information of the drone 500, relative location information of the drone 500 in relation to the mobile terminal 100 and flight speed information of the drone 500. In order to control the drone 500, the controller 180 of the mobile terminal 100 can further obtain at least one of flight time information of the drone 500 (e.g., flight start time information of the drone 500, flight end time information of the drone 500, total flight time information of the drone 500, etc.), location information of the drone 500 when capturing is started, location information of the drone 500 when capturing is terminated, information indicating whether a trajectory of a flight path of the drone 500 corresponds to a looped curve, GPS satellite information (e.g., accuracy of a GPS signal, the number of GPS satellites, etc.), information on a model of the drone 500 (e.g., brand information of the drone 500, model name information of the drone 500, battery time information of the drone 500, power consumption information of the drone 500, etc.), weather information when capturing, capturing date information and capturing area information as the capturing information based on at least one of information input to the mobile terminal 100 by a user to control the drone 500, information obtained by the sensing unit 140 of the mobile terminal 100 and the obtained flight information.

As an example, the absolute location information of the drone 500 can include at least one of latitude and longitude information of the drone 500, GPS coordinate information of the drone 500, height above sea level information of the drone 500 and current altitude information of the drone 500 compared to altitude information of the drone 500 when the drone starts to fly.

As an example, the relative location information of the drone 500 can include at least one of information on a distance between the mobile terminal 100 and the drone 500, information on an altitude difference between the mobile terminal 100 and the drone 500 and information on a direction (e.g., information on an angle between a direction of a line connecting the mobile terminal 100 and the drone 500 and a direction at which a rear side of the mobile terminal 100 is facing) on a reference surface (e.g., a surface of the sea) of the drone 500 based on a direction at which the mobile terminal 100 is facing.

The controller 180 can identify a location of the drone 500 using the absolute location information of the drone 500, identify the position of the drone 500 using the relative location information of the drone 500 and identify the position of the drone 500 by combining at least a part of the absolute location information of the drone 500 and at least a part of the relative location information of the drone 500 with each other.

Meanwhile, the camera movement information can include at least one of absolute direction information (angle information) of the camera 540 of the drone 500 and relative direction information (angle information) of the camera 540 of the drone 500 in relation to the mobile terminal 100. And, in order to control the drone 500, the controller 180 of the mobile terminal 100 can further obtain information on whether the camera 540 of the drone 500 is capturing a user of the mobile terminal 100, information on whether the camera 540 is capturing scenery, information on distribution of a capturing direction of the camera 540 when the camera 540 is capturing the scenery, information on a capturing ratio between the user of the mobile terminal 100 and the scenery and the like as the capturing information based on at least one of information input to the mobile terminal 100 by the user, information obtained by the sensing unit 140 and the location information collecting unit of the mobile terminal 100.

As an example, the absolute location information of the camera 540 can include at least one of oriental information of the camera 540 based on a geomagnetic field, horizontal angle information of the camera 540 on a plane formed by x-y axis based on a front direction of the drone 500, vertical angle information of the camera 540 based on a sea level and vertical angle information of the camera 540 on a z axis based on a plane including a length direction of the main body 530 of the drone 500.

And, as an example, the relative location information of the camera 540 can include at least one of horizontal angle information (relative oriental information) between a direction at which a rear side of the mobile terminal 100 is facing and a direction at which the camera 540 of the drone 500 is facing, horizontal angle information (relative oriental information) between a line connecting the mobile terminal 100 and the drone 500 with each other and the direction at which the camera 540 of the drone 500 is facing and vertical angle information between the line connecting the mobile terminal 100 and the drone 500 with each other and the direction at which the camera 540 of the drone 500 is facing. The controller 180 of the mobile terminal 100 stores or temporarily stores the obtained capturing information in the memory 170.

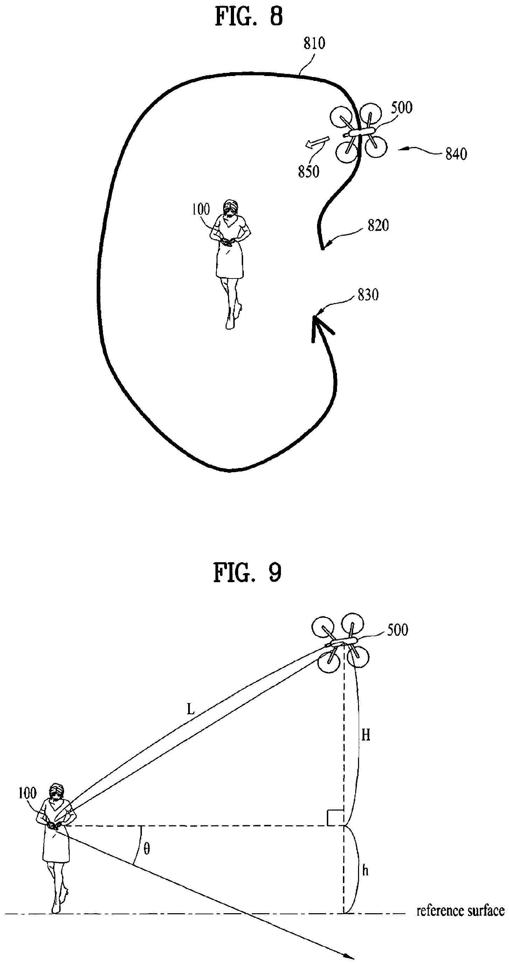

FIG. 8 is a diagram illustrating explaining an example of capturing information obtained by a mobile terminal according to one embodiment of the present invention in case of capturing an image using a drone. Referring to FIG, 8, a user captures an image using the drone 500 and can control an operation of the drone 500 via a specific program (application) installed in the mobile terminal 100.

The controller 180 of the mobile terminal 100 can obtain a trajectory 810 of a flight path of the drone 500, a starting point 820 of the flight path of the drone 500, an end point 830 of the flight path of the drone 500, a location 840 of the drone 500, a direction 850 of the camera 540 of the drone 500 and the like as capturing information based on location information of the mobile terminal 100 and a sensing data transmitted from the drone 500.

FIG. 9 is a diagram illustrating explaining an example of a method of identifying a position of a drone among capturing information obtained by a mobile terminal according to one embodiment of the present invention in case of capturing an image using the drone. The controller 180 of the mobile terminal 100 can identify a position of the drone 500 based on location information of the mobile terminal 100 and a sensing data transmitted from the drone 500.

Specifically, the controller 180 can obtain distance information (L) between the mobile terminal 100 and the drone 500. The controller 180 can obtain the distance information (L) between the mobile terminal 100 and the drone 500 based on a signal transceived between the wireless communication unit 110 and the communication unit 560 of the drone 500. For instance, the controller 180 can obtain the distance information (L) between the mobile terminal 100 and the drone 500 based on strength of a signal transmitted from the communication unit 560 of the drone 500 or based on delay time between transmission timing of a signal transmitted from the wireless communication unit 110 to the communication unit 560 of the drone 500 and reception timing of the signal received by the communication unit 560 of the drone 500.

And, the controller 180 can obtain angle information (θ) (i.e., horizontal angle information) between a line connecting the mobile terminal 100 and the drone 500 with each other, which is transcribed on a plane identical to a height of the mobile terminal 100, and a direction at which a rear side of the mobile terminal 100 is facing.

Depending on embodiment, in case of determining the direction at which the rear side of the mobile terminal 100 is facing, which is necessary for obtaining the horizontal angle information of the drone 500, the controller 180 can continuously use the direction at which the rear side of the mobile terminal 100 is facing, which is detected when the flight of the drone 500 is started, after the flight of the drone 500 has started. This is because the direction at which the rear side of the mobile terminal 100 is facing can be minutely twisted unlike an intention of a user due to a minute movement of the user after the flight of the drone 500 is started. Or, if the direction at which the rear side of the mobile terminal 100 is facing is twisted due to the minute movement of the user after the flight of the drone 500 is started, the memory 170 may store an algorithm capable of compensating for the twist.

And, the controller 180 can obtain information (H + h) on a height above sea level of the drone 500 as height information of the drone 500. The controller 180 can identify a position of the drone 500 using the obtained distance information (L) between the mobile terminal 100 and the drone 500, the horizontal angle information (θ) of the drone 500 and the information (H + h) on the height above sea level of the drone 500.

Depending on embodiment, the controller 180 can obtain a difference (H) between the information (H + h) on the height above sea level of the drone 500 and information (h) on a height above sea level of the mobile terminal 100 as the height information of the drone 500. Or, depending on embodiment, if a value of the information (H + h) on the height above sea level of the drone 500 is equal to or greater than a predetermined value or if the value of the information (H + h) on the height above sea level of the drone 500 is greater than a value of the information (h) on the height above sea level of the mobile terminal 100 more than a predetermined value, the controller 180 ignores the value of the information (h) on the height above sea level of the mobile terminal 100 and can obtain the information (H + h) on the height above sea level of the drone 500 as the height information of the drone 500.

Or, depending on embodiment, if the drone 500 is capturing centering on a user (centering on the mobile terminal 100), in order to more precisely identify a positon of the drone 500, the controller 180 can obtain a difference between the information (H + h) on the height above sea level of the drone 500 and the information (h) on the height above sea level of the mobile terminal 100 as the height information of the drone 500.

Depending on embodiment, the controller 180 cancan output a guide message on the display unit 151 of the mobile terminal 100 to indicate that the drone 500 is positioned at an altitude of several meters from a position at which a user is standing and the drone 500 is positioned at a prescribed angle in the left (or in a counterclockwise direction or a clockwise direction) from the position at which the user is standing.

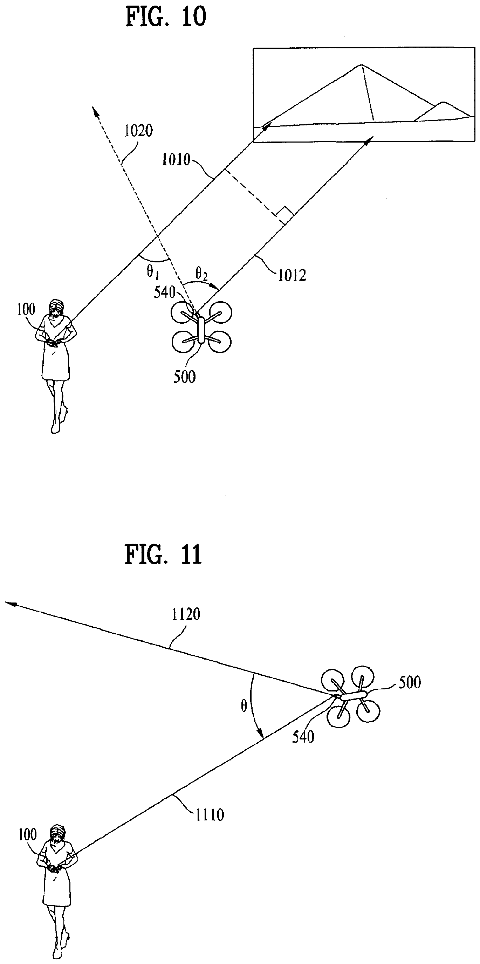

FIG. 10 is a diagram illustrating explaining an example of a method of identifying a movement of a camera among capturing information obtained by a mobile terminal according to one embodiment of the present invention in case of capturing an image using a drone. FIG. 10 is explained with an example of information mainly obtained by capturing scenery instead of a user by the drone 500.

The controller 180 of the mobile terminal 100 can identify a horizontal movement of the camera 540 of the drone 500 based on location information of the mobile terminal 100 and a sensing data transmitted from the drone 500. Specifically, the controller 180 can obtain information on an angle (θ1) formed by a line 1010 of a direction at which a rear side of the mobile terminal 100 is facing and a line 1020 of a direction at which the camera 540 of the drone 500 is heading (facing) as the horizontal movement information of the camera 540.

The information on the angle (θ1) is identical to information on an angle (θ2) formed by a line 1012 resulted from moving the line 1010 of the direction at which the rear side of the mobile terminal 100 is facing in parallel and the line 1020 of the direction at which the camera 540 of the drone 500 is facing. Hence, depending on embodiment, in case of capturing preferred scenery (e.g., pyramid), the controller 180 can output a guide message on the display unit 151 of the mobile terminal 100 to indicate the camera 540 of the drone 500 to be rotated in a right direction (or in clockwise direction) as much as θ2 or in a counterclockwise direction as much as 360 - θ2.

FIG. 11 is a diagram illustrating explaining a different example of a method of identifying a movement of a camera among capturing information obtained by a mobile terminal according to one embodiment of the present invention in case of capturing an image using a drone. FIG. 11 is explained with an example of information mainly obtained by capturing a user by the drone 500.

The controller 180 of the mobile terminal 100 can identify a horizontal movement of the camera 540 of the drone 500 based on location information of the mobile terminal 100 and a sensing data transmitted from the drone 500. Specifically, the controller 180 can obtain information on an angle (θ) formed by a line 1110 connecting the mobile terminal 100 and the drone 500 with each other and a line 1120 of a direction at which the camera 540 of the drone is heading (facing) as information on the horizontal movement of the camera 540.

Depending on embodiment, in case of capturing a user itself, the controller 180 can output a guide message on the display unit 151 of the mobile terminal 100 to indicate the camera 540 of the drone 500 to be rotated in a left direction (or in a counterclockwise direction) as much as θ or in a clockwise direction as much as 360 - θ.

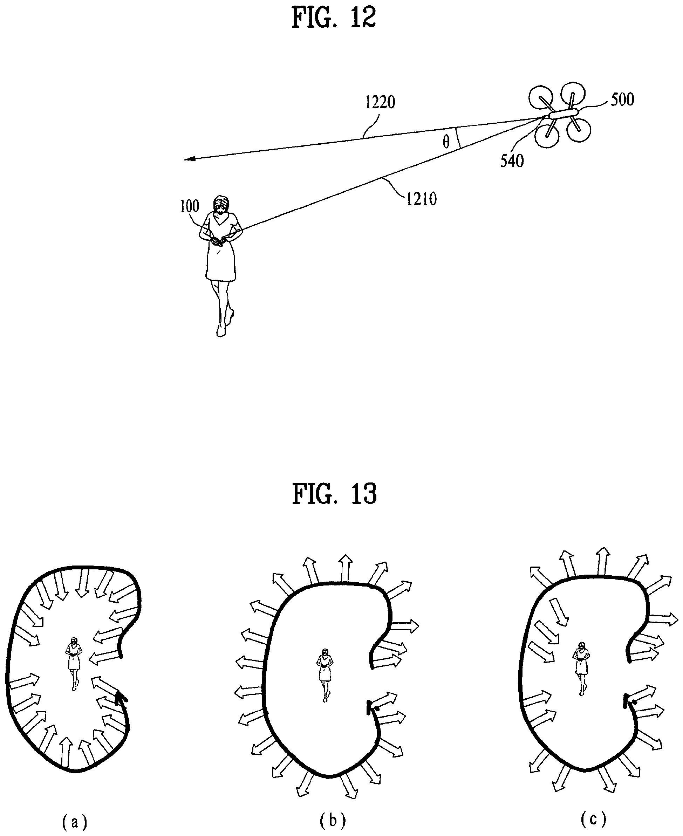

FIG. 12 is a diagram illustrating explaining a further different example of a method of identifying a movement of a camera among capturing information obtained by a mobile terminal according to one embodiment of the present invention in case of capturing an image using a drone. The controller 180 of the mobile terminal 100 can identify a vertical movement of the camera 540 of the drone 500 based on location information of the mobile terminal 100 and a sensing data transmitted from the drone 500.

Specifically, the controller 180 can obtain information on an angle (θ) formed by a line 1210 connecting the mobile terminal 100 and the drone 500 with each other and a line 1220 of a direction at which the camera 540 of the drone is heading (facing) as information on the vertical movement of the camera 540. Depending on embodiment, in case of capturing a user itself, the controller 180 can output a guide message on the display unit 151 of the mobile terminal 100 to indicate the camera 540 of the drone 500 to be rotated in a down direction as much as θ.

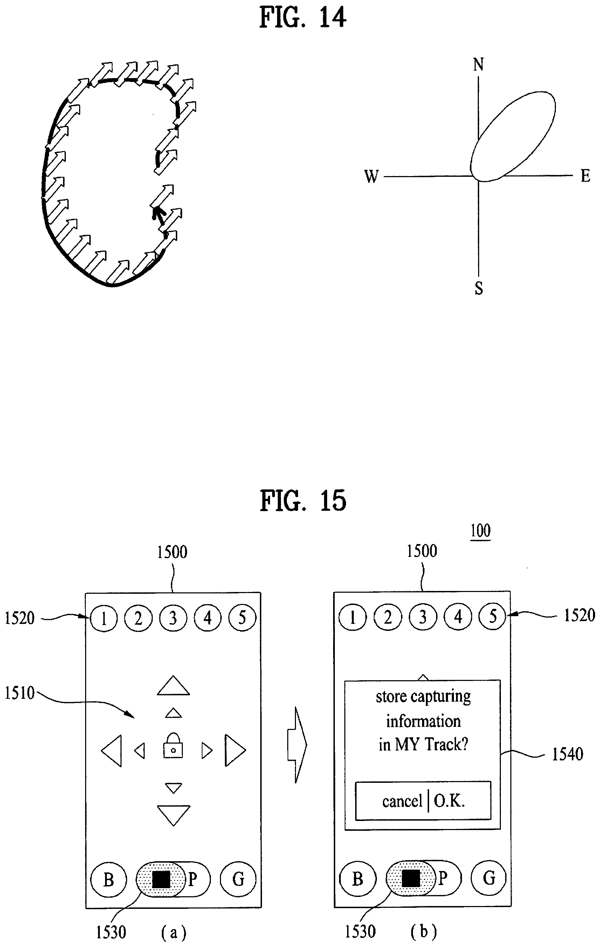

FIGS. 13 and 14 are diagrams illustrating explaining an example of capturing information obtained by a mobile terminal according to one embodiment of the present invention in case of capturing an image using a drone. In order to control the drone 500, the controller 180 of the mobile terminal 100 can obtain information on at least one of whether the camera 540 of the drone 500 is capturing a user of the mobile terminal 100, whether the camera 540 is capturing scenery, distribution of a capturing direction of the camera 540 when the camera 540 is capturing the scenery and a capturing ratio between the user of the mobile terminal 100 and the scenery based on information input to the mobile terminal 100 by the user, information obtained by the sensing unit 140 and the location information collecting unit of the mobile terminal 100 and a sensing data transmitted from the drone 500.

As an example, referring to FIG. 13 (a), the controller 180 can identify that the camera 540 of the drone 500 is capturing a user of the mobile terminal 100 or has captured the user of the mobile terminal 100. As a different example, referring to FIG. 13 (b), the controller 180 can identify that the camera 540 of the drone 500 is capturing scenery or has captured the scenery.

As a further different example, referring to FIG. 13 (c), when the camera 540 captures the user of the mobile terminal 100 and the scenery, the controller 180 can identify information on a capturing ratio between the user of the mobile terminal 100 and the scenery. As a further different example, referring to FIG. 14, the controller 180 can identify that the camera 540 of the drone 500 is capturing the scenery and can also identify information (oriental information) on distribution of a capturing direction of the camera 540 when the scenery is captured.

Depending on embodiment, the controller 180 can display an indicator, a graphic, a text, an image, an icon and the like (refer to FIGS. 13 and 14) on the display unit 151 based on the aforementioned identified information to enable a user to visually check the information on whether the camera 540 of the drone 500 is capturing a user of the mobile terminal 100, the information on whether the camera 540 is capturing scenery, the information on distribution of a capturing direction of the camera 540 when the camera 540 is capturing the scenery, the information on a capturing ratio between the user of the mobile terminal 100 and the scenery and the like.

In the following, image capturing via the drone 500 controlled by the mobile terminal 100 and various embodiments capable of being occurred after capturing information is obtained are explained with reference to FIGS. 15 to 24. In particular, FIG. 15 is a diagram illustrating explaining an example of a method for a mobile terminal to store capturing information corresponding to an image data captured by a drone according to one embodiment of the present invention.

Referring to FIG. 15 (a), the controller 180 of the mobile terminal 100 displays an execution screen 1500 of an application for controlling the drone 500 on the display unit 151. As an example, the execution screen 1500 can include a touch control area 1510 for controlling a movement of the drone 500 and/or a movement of the camera 540 of the drone 500 and a preset area 1520 for configuring a mode related to a flight of the drone 500/capturing using the drone 500.

When the user wants to terminate the capturing using the drone 500, the user can select a capturing stop button 1530 in the execution screen 1500. If the capturing using the drone 500 is terminated or completed by the selection of the capturing stop button 1530, as shown in FIG. 15 (b), the controller 180 can output a message 1540 on the display unit 151 to check whether capturing information obtained in response to an image data captured by the drone 500 is to be stored.

If a user selects a confirmation menu included in the message 1540, the controller 180 can store the obtained capturing information in the memory 170. The controller 180 can not store the capturing information in the memory 170 while the image data is stored in the memory 170. Or, the controller 180 can store the capturing information only in the memory 170 while not storing the image data in the memory 170. Or, the controller 180 can store both the image data and the capturing information in the memory 170.

Depending on embodiment, the message 1540 may include a menu option enabling a user to select whether to store the image data only, whether to store the capturing information only or whether to store both the image data and the capturing information among the image data and the capturing information. Or, depending on embodiment, if a user sets whether to store the image data and the capturing information in advance via the application, a menu option in accordance with the setting of the user can be included in the message 1540 only.

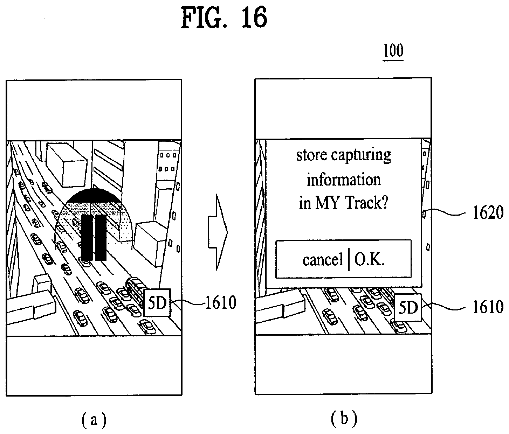

Or, depending on embodiment, when a user sets whether to store the image data and the capturing information in advance via the application, if the capturing using the drone 500 is terminated or completed by the selection of the capturing stop button 1530, the controller 180 can automatically store at least one of the image data and the capturing information in the memory 170 according to the setting of the user. Meanwhile, according to one embodiment of the present invention, a user can store a preferred part only among the obtained capturing information in the memory 170. Regarding this, it shall be described with reference to FIG. 16 to FIG. 19 in the following.

FIG. 16 is a diagram illustrating explaining an example of a method for a mobile terminal to edit and store capturing information corresponding to an image data captured by a drone according to one embodiment of the present invention. The controller 180 of the mobile terminal 100 stores an image data obtained by the camera 540 of the drone 500 in the memory 170 and can temporarily store capturing information obtained in response to the image data in the memory 170.

A user can watch an image captured using the drone 500 using the mobile terminal 100. As shown in FIG. 16 (a), the controller 180 can output the obtained image data on the display unit 151 according to a command for playing the image captured using the drone 500. A screen on which the image data is output may include a menu button 1610 for selecting storage of capturing information. And, the user can temporarily stop playing an image on a preferred frame.

If the user selects the menu button 1610 after the playing of the image is temporarily stopped, the controller 180 can store a part of the temporarily stored capturing information in the memory 170. In this instance, the part of the capturing information may correspond to capturing information corresponding to an image data ranging from a first part to a point where the playback is temporarily stopped among a whole section of the image data or capturing information corresponding to an image data ranging from the point where the playback is temporarily stopped to an end part among the whole section of the image data.

When a user captures an image using the drone 500, images, which are captured before a preferred capturing composition is found, may correspond to unnecessary parts in some degree. Hence, by using the aforementioned method, the user can store capturing information corresponding to a preferred image only.

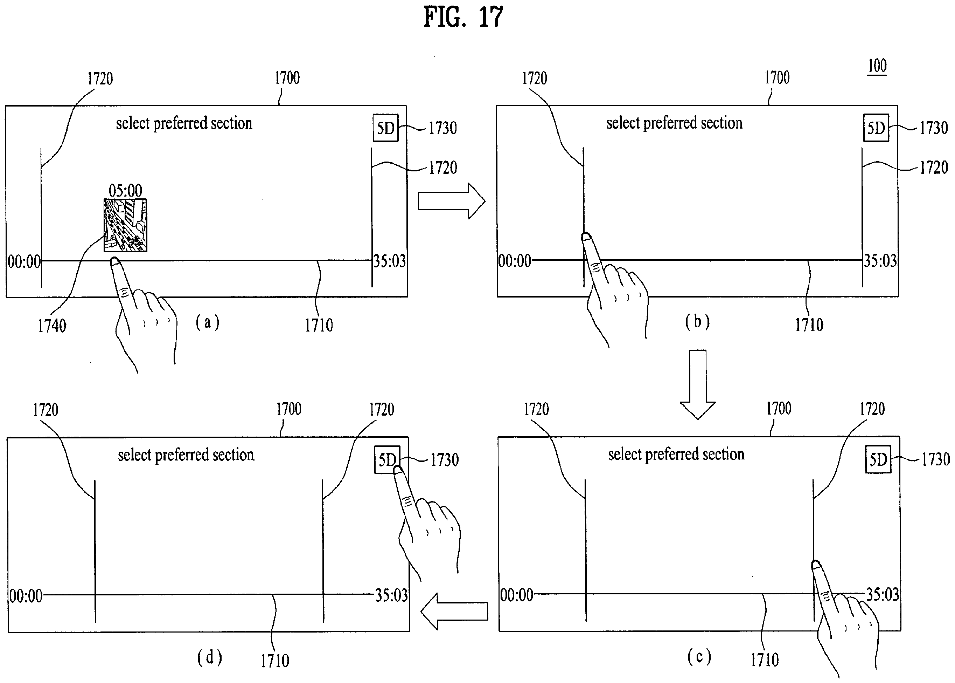

FIG. 17 is a diagram illustrating explaining a different example of a method for a mobile terminal to edit and store capturing information corresponding to an image data captured by a drone according to one embodiment of the present invention. The controller 180 of the mobile terminal 100 stores an image data obtained by the camera 540 of the drone 500 in the memory 170 and can temporarily store capturing information obtained in response to the image data in the memory 170.

A user selects capturing information corresponding to an image data of a preferred section from the capturing information corresponding to the obtained image data and can store the selected capturing information in the memory 170. The controller 180 can output an editing screen 1700 of capturing information on the display unit 151 according to a command for selecting a menu configured to edit a storing range of the obtained capturing information. For instance, the editing screen 1700 can include a progress bar 1710 corresponding to a whole section of image data obtained by the camera 540 of the drone 500 and an indicator 1720 for selecting at least a part of section from the whole section of the image data.

And, the editing screen can further include a menu button 1730 for storing capturing information in the memory 170. As an example, if there exist two indicators 1720 and the menu button 1730 is selected by a user, capturing information corresponding to an image data of a section, which exits between the two indicators 1720, among the whole section of the image data can be stored in the memory 170.

Referring to FIG. 17 (a), if a command touching a point on the progress bar 1710 is detected, the controller 180 can output a thumbnail image 1740 corresponding to an image data of the point on the display unit 151. A user can checks the thumbnail image corresponding to the image data of the point while touching the point on the progress bar 1710 for more than a predetermined time. Or, the user can check each thumbnail image corresponding to each point on the progress bar by continuously touching and dragging points on the progress bar 1710.

A user checks a thumbnail image of an image data via the progress bar 1710 and can select a start point of a section of an image data for storing capturing information. As an example, the user can select the start point of the section of the image data for storing the capturing information by positioning one indicator 1720 on the start point of the section of the image data for storing the capturing information on the progress bar 1710.

Referring to FIG. 17 (b), the controller 180 can memorize a point of the progress bar 1710 at which the indicator 1720 is positioned as the start point of the section of the image data for storing the capturing information. And, the user checks a thumbnail image of an image data via the progress bar 1710 and can select an end point of a section of an image data for storing capturing information by positioning another indicator 1720 on the end point of the section of the image data for storing the capturing information on the progress bar 1710.

Referring to FIG. 17 (c), the controller 180 can memorize a point of the progress bar 1710 at which another indicator 1720 is positioned as the end point of the section of the image data for storing the capturing information. And, the user selects a menu button 1730 included in the editing screen 1700 and may be then able to store the capturing information corresponding to the image data of the section selected by the indicators 1720 in the memory 170.

Referring to FIG. 17 (d), if a command selecting the menu button 1730 included in the editing screen 1700 is detected, the controller 180 can store capturing information corresponding to the image data of the section, which exists between the two indicators 1720 among the whole section of the image data, in the memory 170. In particular, among the capturing information temporarily stored in the memory 170, capturing information corresponding to an image data of a section, which does not exist between the two indicators 1720 among the whole section of the image data, can be deleted from the memory 170.

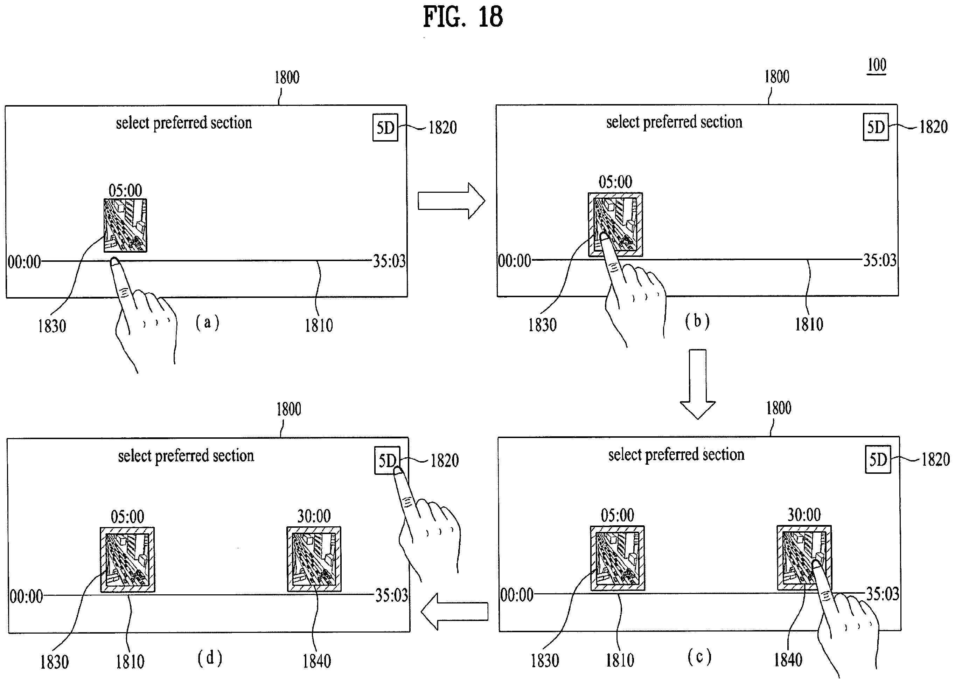

FIG. 18 is a diagram illustrating explaining a further different example of a method for a mobile terminal to edit and store capturing information corresponding to an image data captured by a drone according to one embodiment of the present invention. The controller 180 of the mobile terminal 100 stores an image data obtained by the camera 540 of the drone 500 in the memory 170 and can temporarily store capturing information obtained in response to the image data in the memory 170.

A user can selects capturing information corresponding to an image data of a preferred section from the capturing information corresponding to the obtained image data and can store the selected capturing information in the memory 170. The controller 180 can output an editing screen 1800 of capturing information on the display unit 151 according to a command for selecting a menu configured to edit a storing range of the obtained capturing information. For instance, the editing screen 1800 can include a progress bar 1810 corresponding to a whole section of image data obtained by the camera 540 of the drone 500 and a menu button 1820 configured to store capturing information corresponding to at least a part of a section selected by a user from among the whole section of the image data in the memory 170.

Referring to FIG. 18 (a), if a command touching a point on the progress bar 1810 is detected, the controller 180 can output a thumbnail image 1830 corresponding to an image data of the point on the display unit 151. A user can checks the thumbnail image corresponding to the image data of the point while touching the point on the progress bar 1810 for more than a predetermined time. Or, the user can check each thumbnail image corresponding to each point on the progress bar by continuously touching and dragging points on the progress bar 1810.

A user checks a thumbnail image of an image data via the progress bar 1810 and can select a start point of a section of an image data for storing capturing information. As an example, referring to FIG. 18 (b), a user selects (touches) a thumbnail image 1830 of a preferred point from among the section of the image data from thumbnail images output by the command of touching the progress bar 1810 and may be then able to select a start point of a section of an image data for storing capturing information. The controller 180 can memorize a point corresponding to the thumbnail image 1830 selected by the user from among the whole section of the image data as the start point of the section of the image data for storing capturing information. Depending on embodiment, if the thumbnail image 1830 is selected, the controller 180 can provide a user with a visual effect highlighting the thumbnail image 1830.

Referring to FIG. 18 (c), a user selects (touches) a thumbnail image 1840 of a preferred point from among the section of the image data from thumbnail images output by the command of touching the progress bar 1810 and may be then able to select an end point of a section of an image data for storing capturing information. The controller 180 can memorize a point corresponding to the thumbnail image 1840 selected by the user from among the whole section of the image data as the end point of the section of the image data for storing capturing information. Depending on embodiment, if the thumbnail image 1840 is selected, the controller 180 can provide a user with a visual effect highlighting the thumbnail image 1840.

And, the user selects a menu button 1820 included in the editing screen 1800 and may be then able to store the capturing information corresponding to the image data of the section positioned between the thumbnail images 1830/1840 among the whole section of the image data in the memory 170. Referring to FIG. 18 (d), if a command selecting the menu button 1820 included in the editing screen 1800 is detected, the controller 180 can store capturing information corresponding to the image data of the section, which exists between the thumbnail images 1830/1840 among the whole section of the image data, in the memory 170. In particular, among the capturing information temporarily stored in the memory 170, capturing information corresponding to an image data of a section, which does not exist between the thumbnail images 1830/1840 among the whole section of the image data, can be deleted from the memory 170.

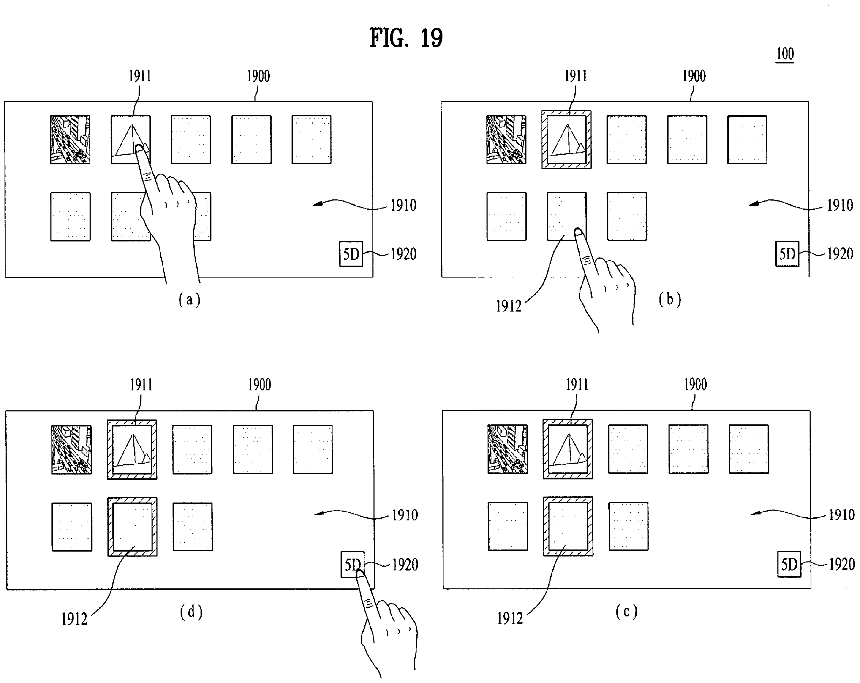

FIG. 19 is a diagram illustrating explaining a further different example of a method for a mobile terminal to edit and store capturing information corresponding to an image data captured by a drone according to one embodiment of the present invention. The controller 180 of the mobile terminal 100 stores an image data obtained by the camera 540 of the drone 500 in the memory 170 and can temporarily store capturing information obtained in response to the image data in the memory 170.

A user can selects capturing information corresponding to an image data of a preferred section from the capturing information corresponding to the obtained image data and can store the selected capturing information in the memory 170. Referring to FIG. 19 (a), the controller 180 can output an editing screen 1900 of capturing information on the display unit 151 according to a command for selecting a menu configured to edit a storing range of the obtained capturing information. For instance, the editing screen 1900 can include thumbnail images 1910 respectively representing a predetermined section among a whole section of image data obtained by the camera 540 of the drone 500 and a menu button 1920 configured to store capturing information corresponding to at least a part of a section selected by a user among the whole section of the image data in the memory 170. The predetermined section may vary according to a length (or time) of the whole section of the image data. In the present embodiment, assume that thumbnail images 1910 respectively representing an image data of a section of 5-minute unit are included in the editing screen 1900.

A user can select a start point of a section of an image data for storing capturing information by selecting one of the thumbnail images 1910. Referring to FIG. 19 (b), according to a command for selecting a thumbnail image 1911 from the thumbnail images 1910, the controller 180 can memorize a point corresponding to the selected thumbnail image 1911 as the start point of the section of the image data for storing capturing information among the whole section of the image data. Depending on embodiment, if the thumbnail image 1911 is selected, the controller 180 can provide a user with a visual effect highlighting the thumbnail image 1911.

And, the user can select an end point of the section of the image data for storing the capturing information by selecting a different thumbnail image from the thumbnail images 1910. Referring to FIG. 19 (c), according to a command for selecting a different thumbnail image from among the thumbnail images 1910, the controller 180 can memorize a point corresponding to the selected thumbnail image 1912 as an end point of the section of the image data for storing the capturing information. Depending on embodiment, if the thumbnail image 1912 is selected, the controller 180 can provide a user with a visual effect highlighting the thumbnail image 1912.

And, the user selects a menu button 1920 included in the editing screen 1900 and may be then able to store the capturing information corresponding to the image data of the section positioned between the thumbnail images 1911/1912 among the whole section of the image data in the memory 170.

Referring to FIG. 19 (d), if a command selecting the menu button 1920 included in the editing screen 1900 is detected, the controller 180 can store capturing information corresponding to the image data of the section, which exists between the thumbnail images 1911/1912 among the whole section of the image data, in the memory 170. In particular, among the capturing information temporarily stored in the memory 170, capturing information corresponding to an image data of a section, which does not exist between the thumbnail images 1911/1912, among the whole section of the image data can be deleted from the memory 170.

In the foregoing description, an example of a method for the mobile terminal 100 to edit and store capturing information corresponding to an image data captured by the drone 500 is explained with reference to FIG. 16 to FIG. 19. As mentioned in the following description, in case of downloading capturing information uploaded to an external server, a GUI is output on the display unit 151 to select capturing information corresponding to an image data of at least a part of a section from among a whole section of image data and it can download capturing information corresponding to an image data of a specific section selected via the output GUI. In this instance, since an example of selecting/editing a range of downloading the uploaded capturing information is similar to what is mentioned earlier with reference to FIG. 16 to FIG. 19, detail explanation on selecting/editing the range of downloading the uploaded capturing information is omitted at this time.

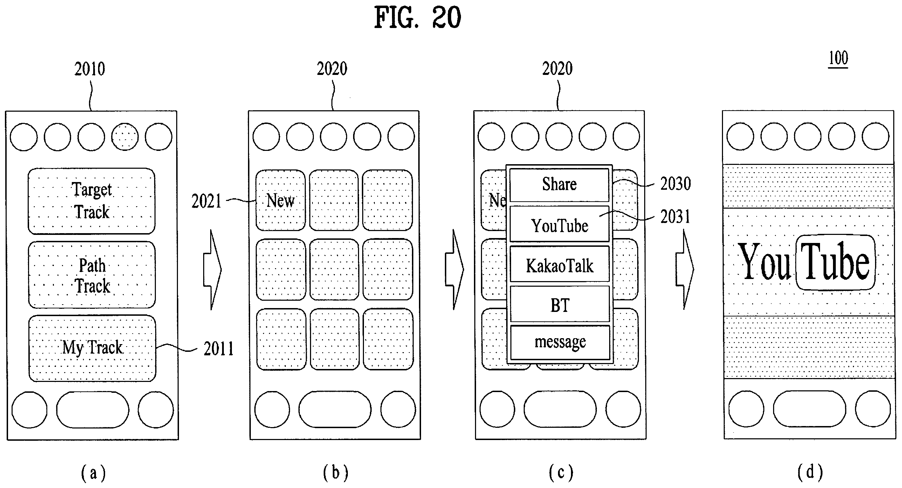

In the following, examples for a method of sharing image data and capturing information stored in the memory 170 with an external device or an external server are explained with reference to FIG. 20 to FIG. 25. FIG. 20 is a diagram illustrating explaining an example of a method for a mobile terminal to share an image data and capturing information stored in a memory with an external device or an external server according to one embodiment of the present invention.

Referring to FIG. 20 (a), the controller 180 of the mobile terminal 100 executes an application related to the drone 500 and a first execution screen 2010 can be output on the display unit 151. The first execution screen 2010 can include image data corresponding to an image captured by the drone 500 and a menu option 2011 enabling a user to check capturing information corresponding to the image data. The image data and the capturing information corresponding to the image data are stored in the memory 170. The image data and the capturing information can be stored in the memory 170 by being edited instead of a state of being obtained as it is.

Referring to FIG. 20 (b), if a command for selecting a menu option 2011 included in the first execution screen 2010 is detected, the controller 180 can output a second execution screen 2020 including a list of the image data and the capturing information stored in the memory 170 on the display unit 151. In the present embodiment, assume that a user selects a menu option 2021 corresponding to an image data and capturing information most recently stored in the memory 170 from the image data and the capturing information stored in the memory 170.

The controller 180 can detect a command for selecting share of the image data and the capturing information via the menu option 2021 corresponding to the image data and capturing information most recently stored in the memory 170 among the image data and the capturing information stored in the memory 170. As an example, if a command touching the menu option 2021 for more than a predetermined time is detected, the controller 180 can detect the command as a command for sharing the image data and the capturing information with an external device or an external server.

Referring to FIG. 20 (c), the controller 180 can output a GUI 2030 on the display unit 151 according to the command for sharing the image data and the capturing information with the external device or the external server. The GUI 2030 can include a list of an external device capable of sharing the image data and the capturing information and/or an external server capable of sharing the image data and the capturing information.

In the present embodiment, assume that a user selects a menu option 2013 corresponding to a specific server from the list of the external device and the external server included in the GUI 2030. Referring to FIG. 20 (d), if a command for selecting the menu option 2031 corresponding to the specific sever is detected, the controller 180 can control the wireless communication unit 110 to transmit (e.g., upload) the image data and the capturing information to the specific server. Depending on embodiment, when image data and capturing information are shared with an external device or an external server, a user can edit capturing information corresponding to an image data of a preferred section and share the capturing information with the external device or the external server only. Since the method of editing the capturing information is similar to what is mentioned earlier with reference to FIG. 16 to FIG. 19, detail explanation on the method is omitted at this time.

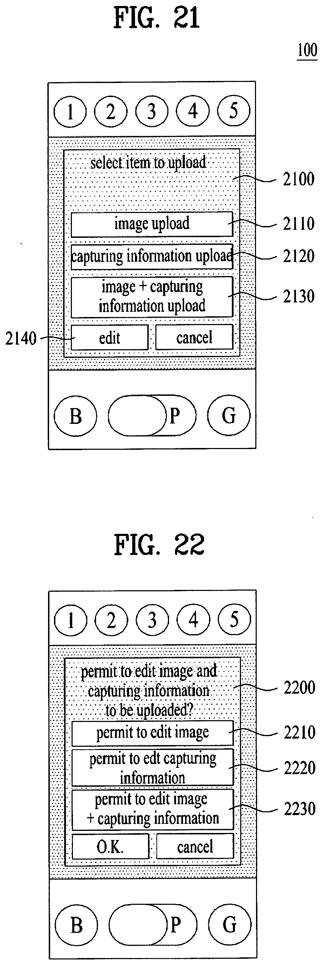

Depending on embodiment, a user can share both the image data and the capturing information with the external device or the external server, share the image data only with the external device or the external server among the image data and the capturing information, or share the capturing information only with the external device or the external server among the image data and the capturing information. Regarding this, it shall be described with reference to FIG. 21 in the following.

FIG. 21 is a diagram illustrating explaining a different example of a method for a mobile terminal to share an image data and capturing information stored in a memory with an external device or an external server according to one embodiment of the present invention. If a command (e.g., a command for selecting the menu option 2031 mentioned earlier with reference to FIG. 20 (c)) for sharing image data and capturing information with an external device or an external server is detected, the controller 180 can output a GUI 2100, which enables a user to select an item to be shared from the image data and the capturing information of a corresponding image, on the display unit 151.

The GUI 2100 can include at least one of a first menu option 2110 configured to share the image data only among the image data and the capturing information, a second menu option 2120 configured to share the capturing information only among the image data and the capturing information and a third menu option 2130 configured to share both the image data and the capturing information.

If a command for selecting one of the first menu option 2110, the second menu option 2120 and the third menu option 2130 is detected via the GUI 2100, the controller 180 can control the wireless communication unit 110 to transmit data/information to the specific server according to the selected menu option.

Depending on embodiment, the GUI 2100 can further include an editing menu option 2140. A user edits image data and/or capturing information using a method similar to the method mentioned earlier with reference to FIG. 16 to FIG. 19 by selecting the editing menu option 2140 included in the GUI 2100 and can make the edited image data and/or the capturing information to be shared with external.

Meanwhile, according to one embodiment of the present invention, when a user shares image data and/or capturing information with an external device or an external server, the user may select whether to permit editing of the image data and/or the capturing information to a third party after the image data and/or the capturing information are shared. Regarding this, it shall be described with reference to FIG. 22 in the following.

FIG. 22 is a diagram illustrating explaining a further different example of a method for a mobile terminal to share an image data and capturing information stored in a memory with an external device or an external server according to one embodiment of the present invention. If a command (e.g., a command for selecting the menu option 2031 mentioned earlier with reference to FIG. 20 (c)) for sharing image data and capturing information with an external device or an external server is detected, the controller 180 can output a GUI 2200, which enables a user to select whether to permit editing of the image data and/or the capturing information to a third party after the image data and/or the capturing information are shared, on the display unit 151.

The GUI 220 can include at least one of a first menu option 2210 configured to permit editing of the image data only among the image data and the capturing information, a second menu option 2220 configured to permit editing of the capturing information only among the image data and the capturing information and a third menu option 2230 configured to permit editing both the image data and the capturing information.

If a command for selecting one of the first menu option 2210, the second menu option 2220 and the third menu option 2230 is detected via the GUI 2200, the controller 180 can control the wireless communication unit 110 to encrypt data/information to make editing of the data/information impossible according to a selected menu option and transmit the encrypted data/information to the specific server. Or, depending on embodiment, when a promise is made with an external server in advance, if a command for selecting one of the first menu option 2210, the second menu option 2220 and the third menu option 2230 is detected via the GUI 2200, the controller 180 can control the wireless communication unit 110 to transmit a signal, which indicates that editing of data/information is not allowed, to the external server. The external server can enable a third party not to edit the data/information based on the signal.

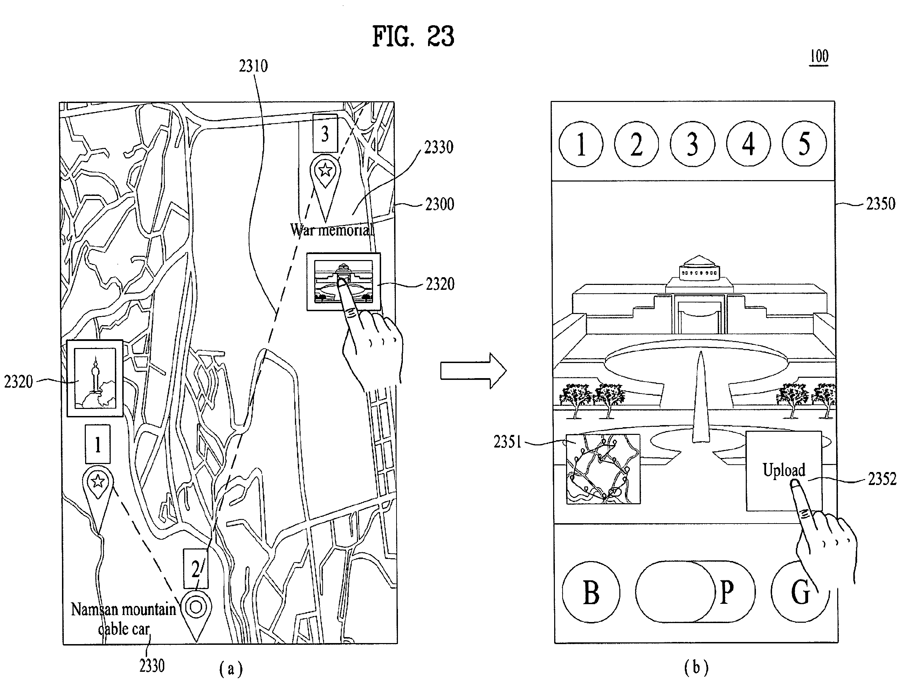

Meanwhile, according to one embodiment of the present invention, a user selects capturing information corresponding to a specific object and/or a specific location from the obtained capturing information and may be then able to share the selected capturing information with an external device or an external server. Regarding this, it shall be described with reference to FIG. 23 in the following.

FIG. 23 is a diagram illustrating explaining a further different example of a method for a mobile terminal to share an image data and capturing information stored in a memory with an external device or an external server according to one embodiment of the present invention.

Referring to FIG. 23 (a), the controller 180 can control the display unit 151 to output at least a part of capturing information of an image captured by the drone 500 on a map screen 2300 including a region at which the image is captured. As an example, if a command for checking the capturing information of the image captured by the drone 500 on a map is detected, the controller 180 outputs the map screen 2300 of a predetermined range on the display unit 151 and can display an indicator indicating at least a part of capturing information corresponding to the output map screen 2300 among the capturing information on the map screen 2300. A user can change a range of a region included in the map screen 2300, i.e., a scale of a map.

The indicator can include at least one of a graphic 2310 indicating a trajectory of a flight path of the drone 500, an image 2320 of an image data corresponding to the capturing information, a text 2330 indicating at least a part of the capturing information and a graphic indicating a movement of the camera 540 of the drone 500. The graphic 2310 indicates a trajectory of a flight path of the drone 500. It can display a total trajectory of the flight path of the drone 500 or a partial trajectory of the flight path of the drone 500 according to a scale of the map screen 2300.

The image 2320 is extracted from an image data corresponding to the capturing information. The image may correspond to a representative image capable of indicating a specific location (a representative tourist attraction, a specific location selected by a user, etc.) included in the map screen 2300 among the image data corresponding to the trajectory of the flight path of the drone 500 displayed on the map screen 2300 or an image selected by a user from among the image data corresponding to the trajectory of the flight path of the drone 500 displayed on the map screen 2300.

The text 2330 indicates at least a part of the capturing information. The text may correspond to information capable of indicating a specific location (a representative tourist attraction, a specific location selected by a user, etc.) included in the map screen 2300 among the flight path of the drone 500.

The graphic indicating the movement of the camera 540 may correspond to information indicating a direction at which the camera 540 is facing when the drone 500 is flying. The controller 180 can share capturing information corresponding to a specific object and/or a specific location selected via the map screen 2300 with an external device or an external server only among capturing information of an image captured by the drone 500. In this instance, the specific object may correspond to a specific building, a specific facility, a specific structure and the like.

Specifically, if a command for selecting one of indicators displayed on the map screen 2300 is detected, the controller 180 can control the wireless communication unit 110 to transmit capturing information corresponding to the selected indicator from among the capturing information to the external device or the external server.

For instance, if a user selects an image 2320 representing war memorial from among indicators displayed on the map screen 2300, the controller 180 can transmit capturing information corresponding to the war memorial among whole capturing information to the external device or the external server via the wireless communication unit 110. Specifically, if a user selects the image 2320 representing the war memorial from among indicators displayed on the map screen 2300, the controller 180 can extract capturing information corresponding to the war memorial from the whole capturing information based on flight information corresponding to a flight path of the drone 500 and camera movement information corresponding to a movement of the camera 540 of the drone 500.

Referring to FIG. 23 (b), if a user selects the image 2320 representing the war memorial from among the indicators displayed on the map screen 2300, the controller 180 can output a screen 2350 for sharing the capturing information corresponding to the war memorial on the display unit 151. As an example, the screen 2350 can include information 2351 indicating a position of the capturing information corresponding to the war memorial selected by a user among a whole flight path of the drone 500 and a menu option 2352 for sharing the capturing information corresponding to the war memorial selected by the user.

The controller 180 can control the wireless communication unit 110 to transmit the capturing information corresponding to the war memorial selected by the user to the external device or the external server according to a command for selecting the menu option 2352. In this instance, depending on embodiment, it is apparent that the example mentioned earlier with reference to FIG. 21 and FIG. 22 is also applicable.

And, depending on embodiment, when capturing information of an image captured by the drone 500 is stored, if a command for selecting one from among indicators displayed on the map screen 2300 is detected, the controller 180 can store capturing information corresponding to the selected indicator only in the memory 170 among whole capturing information. Or, the controller 180 can separately store the capturing information corresponding to the selected indicator in the memory 170 irrespective of the whole capturing information.

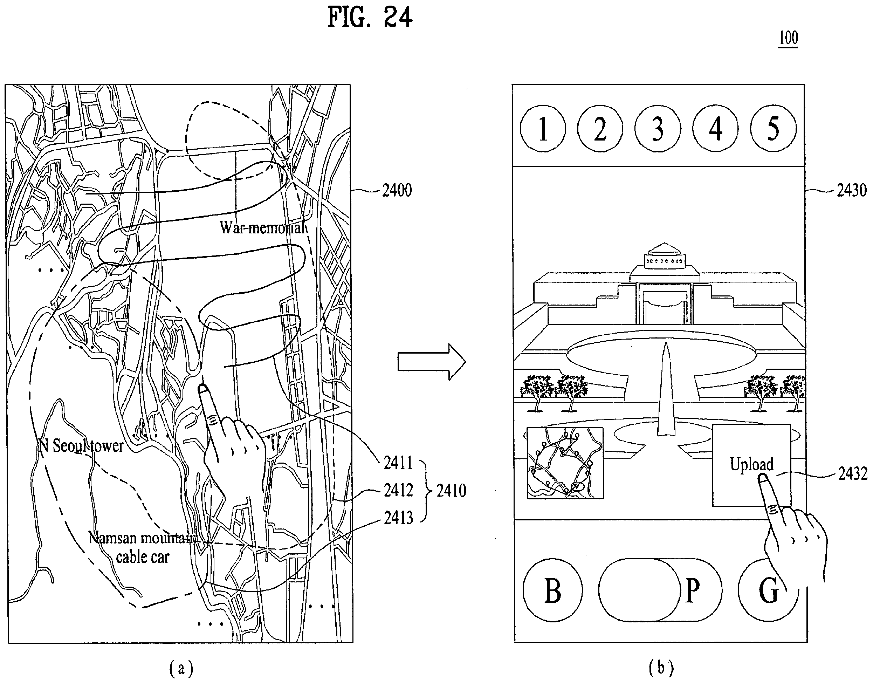

Meanwhile, according to one embodiment of the present invention, a user selects capturing information corresponding to a specific path from capturing information corresponding to a plurality of flight paths of the drone 500 and may be then able to share the capturing information corresponding to the specific path with an external device or an external server. Regarding this, it shall be described with reference to FIG. 24 in the following.

FIG. 24 is a diagram illustrating explaining a further different example of a method for a mobile terminal to share an image data and capturing information stored in a memory with an external device or an external server according to one embodiment of the present invention.

Referring to FIG. 24 (a), the controller 180 can control the display unit 151 to output at least a part of capturing information corresponding to a plurality of flight paths of the drone 500 on a map screen 2400 including a region at which an image is captured. As an example, if a command for checking capturing information of each image, which is captured by the drone 500 on a plurality of the flight paths, on a map is detected, the controller 180 outputs a map screen 2400 of a predetermined range on the display unit 151 and can display an indicator 2410 indicating at least a part of capturing information corresponding to the output map screen 2400 among the capturing information of each image on the map screen 2400. A user can change a range of a region included in the map screen 2400, i.e., a scale of the map, by zoom in or zoom out the map screen 2400.

The indicator 2410 can include at least one of a graphic indicating a trajectory of each flight path of the drone 500, an image of an image data corresponding to each capturing information, a text indicating at least a part of each capturing information and a graphic indicating a movement of the camera 540 of the drone 500. In the present embodiment, assume that a first graphic 2411 corresponding to a trajectory of a first flight path, a second graphic 2412 corresponding to a trajectory of a second flight path and a third graphic 2413 corresponding to a trajectory of a third flight path are displayed on the map screen 2400 as the indicator 2410.

The controller 180 can enable capturing information corresponding to a specific flight path selected from a plurality of flight paths of the drone 500 via the map screen 2400 to be shared with an external device or an external server. Specifically, if a command for selecting one from among indicators 2410 displayed on the map screen 2400 is detected, the controller 180 can control the wireless communication unit 110 to transmit capturing information corresponding to a flight path, which corresponds to the selected indicator, among capturing information corresponding to each flight path stored in the memory 170 to the external device or the external server.

Referring to FIG. 24 (b), if a user selects a third indicator 2413 from among indicators displayed on the map screen 2400, the controller 180 can output a screen 2430 for sharing capturing information corresponding to the third flight path on the display unit 151.

The controller 180 can control the wireless communication unit 110 to transmit the capturing information corresponding to the third flight path among capturing information corresponding to each flight path stored in the memory 170 to the external device or the external server according to a command for selecting a menu option 2432 configured to share capturing information included in the screen 2430. In this instance, depending on embodiment, it is apparent that the example mentioned earlier with reference to FIG. 21 and FIG. 22 is also applicable.

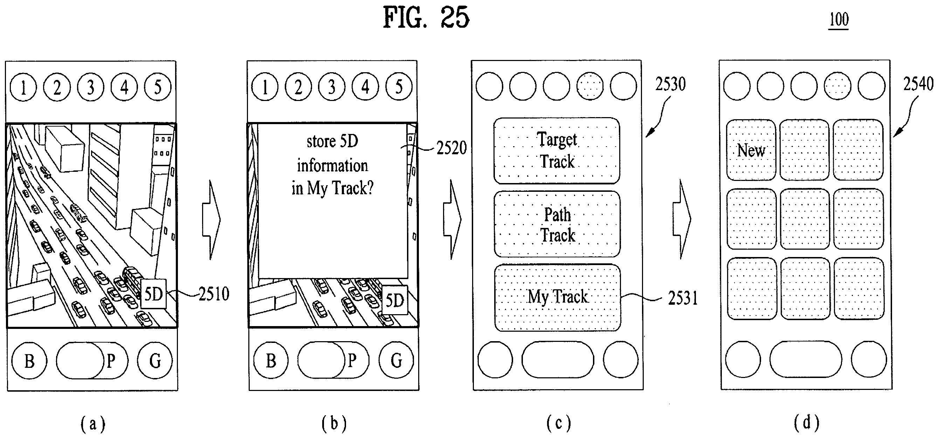

In the following, examples for a method of downloading capturing information (e.g., capturing information of an image transmitted from an external device and/or capturing information of an image uploaded to an external server) of an image shared by a third party to the mobile terminal 100 are explained with reference to FIG. 25 to FIG. 27. For clarity, assume a case that the capturing information of the image uploaded to the external server is downloaded to the mobile terminal 100 in the following description.

FIG. 25 is a diagram illustrating explaining an example of a method for a mobile terminal to download capturing information of an image uploaded to an external server according to one embodiment of the present invention. Referring to FIG. 25 (a), a user can appreciate an image (i.e., an image captured by the drone 500) uploaded to an external server by accessing the external server. The controller 180 outputs an access screen for accessing the external server on the display unit 151 and can play the uploaded image via the access screen according to a selection of the user. Depending on embodiment, the access screen may include a menu option 2510 for downloading capturing information of the image.

Referring to FIG. 25 (b), if a command for selecting the menu option 2510 is detected, the controller 180 can output a message 2520 for checking whether the capturing information of the image is downloaded (stored) on the display unit 151. If the download of the capturing information of the image is selected via the message 2520, the controller 180 can control the wireless communication unit 110 to download the capturing information from an external server and stores the downloaded capturing information in the memory 170.

Meanwhile, referring to FIG. 25 (c), the controller 180 executes an application related to the drone 500 according to a selection of a user and can output a first execution screen 2530 on the display unit 151. The first execution screen 2530 can include a menu option 2531 enabling a user to check image data stored in the memory 170 and capturing information corresponding to the image data. The image data stored in the memory 170 and the capturing information may be stored in the memory 170 in a state of being edited by a user instead of a state of being downloaded from the external server as it is.

Referring to FIG. 25 (b), if a command for selecting the menu option 2531 included in the first execution screen 2530 is detected, the controller 180 can output a second execution screen 2540 including a list of the image data stored in the memory 170 and the capturing information on the display unit 151.

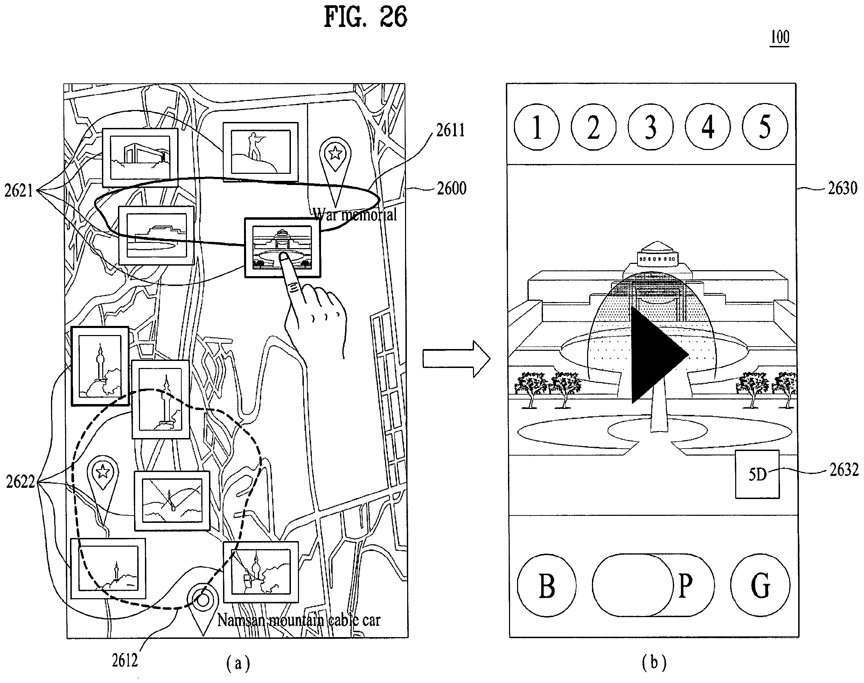

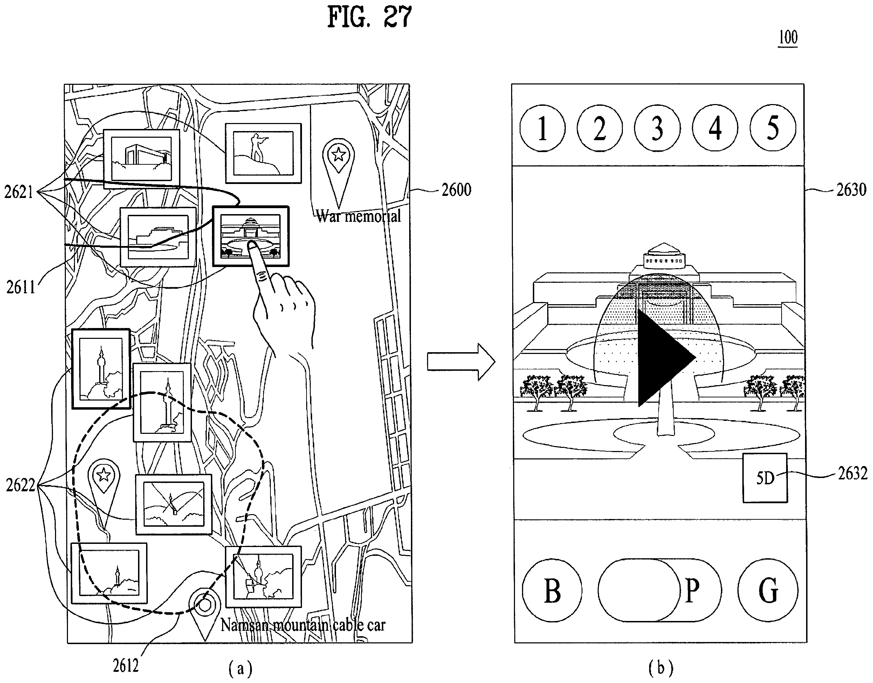

Meanwhile, according to one embodiment of the present invention, if a user searches for an image captured by the drone 500 in a specific region or a specific range from the images uploaded to the external server, the mobile terminal 100 can provide the user with a search result of the images via a map screen corresponding to the specific region or the specific range. Regarding this, it shall be described with reference to FIG. 26 and FIG. 27 in the following.

FIG. 26 is a diagram illustrating explaining an example of a method for a mobile terminal to provide a search result of an image captured by a drone and download capturing information of a specific image according to one embodiment of the present invention. Referring to FIG. 26 (a), the controller 180 can output a map screen 2600 including a search result of images captured by the drone 500 in a specific region or a specific range among images uploaded to an external serer.

If a search word for searching for the images captured by the drone 500 in the specific region or the specific range is input, the external server can provide at least a part of capturing information of the images captured by the drone 500 on the map screen 2600 including the specific region or the specific range. The map screen 2600 can include an indicator indicating at least a part of the capturing information of the images captured by the drone 500 in the specific region or the specific range. A user can change a range of a region included in the map screen 2600, i.e., a scale of a map, by zoom in or zoom out the map screen 2600.

Depending on embodiment, the map screen 2600 may include an indicator respectively indicating at least a part of capturing information corresponding to each a plurality of flight paths. The indicator can include at least one of a graphic 2611/2612 indicating a trajectory of each flight path of the drone 500, an image 2612/2622 of an image data corresponding to each capturing information, a text indicating at least a part of each capturing information and a graphic indicating a movement of the camera 540 of the drone 500. For instance, the map screen 2600 can include a graphic 2611 indicating a trajectory of a first flight path and an image 2621 of an image data captured on the first flight path as an indicator indicating at least a part of capturing information corresponding to the image captured on the first flight path and a graphic 2621 indicating a trajectory of a second flight path and an image 2622 of an image data captured on the second flight path as an indicator indicating at least a part of capturing information corresponding to the image captured on the second flight path.

If one indicator is selected from among indicators displayed on the map screen 2600, the external server enables capturing information of an image corresponding to the selected indicator to be downloaded. Depending on embodiment, it can download whole capturing information of the image corresponding to the selected indicator or capturing information corresponding to a specific object and/or a specific location only among the whole capturing information corresponding to the selected indicator.

If a command for selecting one from among the indicators displayed on the map screen 2600 is detected, the controller 180 of the mobile terminal 100 can control the wireless communication unit 110 to download capturing information of an image corresponding to the selected indicator. For instance, if a user selects an indicator 2611 indicating a trajectory of a first flight path from among indicators displayed on the map screen 2600, the controller 180 can control the wireless communication unit 110 to receive capturing information of an image captured on the first flight path from the external server. And, the controller 180 can store the received capturing information in the memory 170.

Referring to FIG. 26 (b), if the user selects the indicator 2611 indicating the trajectory of the first flight path from among indicators displayed on the map screen 2600, the controller 180 can output a screen 2630 for sharing the capturing information of the image captured on the first flight path on the display unit 151. The user can play and appreciate the image captured on the first flight path via the screen 2630. And, the controller 180 can control the wireless communication unit to download the capturing information of the image captured on the first flight path from the external server according to a command of selecting a menu option 2632 included in the screen 2630.

FIG. 27 is a diagram illustrating explaining a different example of a method for a mobile terminal to provide a search result of an image captured by a drone and download capturing information of a specific image according to one embodiment of the present invention. Explanation on contents overlapped with what is mentioned earlier with reference to FIG. 26 is omitted at this time. In the following, the present invention is explained centering on a different point.

Referring to FIG. 27 (a), indicators 2611/2612/2621/2622 indicating at least a part of capturing information of images captured by the drone 500 in a specific region or a specific range are displayed on a map screen 2600. What is different from FIG. 16 (a) is that the indicator 2611 indicating a trajectory of a first flight path is partially displayed on the map screen 2600. If a part of a prescribed flight path of the drone 500 deviates from a range of a region included in the map screen 2600, a trajectory corresponding to a part of the flight path belonging to the range of the region included in the map screen 2600 can be displayed on the map screen 2600 only. Depending on embodiment, if a user zooms out the map screen 2600, the range of the region included in the map screen 2600 is widened and the indicator 2611 indicating a whole trajectory of the first flight path can be displayed on the map screen.

If one of the indicators displayed on the map screen 2600 is selected, an external server can enable capturing information of an image corresponding to the selected indicator to be downloaded within the range displayed on the map screen 2600. For instance, if a user selects an indicator 2611 indicating a trajectory of a first flight path from among indicators displayed on the map screen 2600, the external server can enable capturing information of an image corresponding to a trajectory part of the first flight path displayed on the map screen 2600 to be downloaded among whole capturing information of images captured on the first flight path.

If a command for selecting the indicator 2611 indicating the trajectory of the first flight path from among the indicators displayed on the map screen 2600 is detected, the controller 180 can control the wireless communication unit 110 to download the capturing information of the image corresponding to the trajectory part of the first flight path displayed on the map screen 2600 among the whole capturing information of the images captured on the first flight path.

Referring to FIG. 27 (b), if a user selects an indicator 2611 indicating a trajectory of a first flight path from among indicators displayed on the map screen 2600, the controller 180 can control the wireless communication unit 110 to output a screen 2630 for sharing capturing information of an image captured on the first flight path on the display unit 151 and receive capturing information of an image corresponding to a trajectory part of the first flight path among whole capturing information of images captured on the first flight path from the external server according to a command for selecting a menu option 2632 included in the screen 2630.

In the foregoing description, although an example of downloading capturing information uploaded to an external server to the mobile terminal 100 is explained, the example can also be similarly applied to a case of outputting a map screen including at least a part of capturing information corresponding to images captured in a specific region or a specific range among capturing information stored in the memory 170 of the mobile terminal 100 and deleting capturing information not selected by a command from the memory 170 according to the command of selecting at least a part of capturing information from capturing information included in the map screen. In this instance, the controller 180 of the mobile terminal 100 can maintain the capturing information corresponding to the selected indicator in the memory 170 and can delete the capturing information not corresponding to the selected indicator from the memory 170.

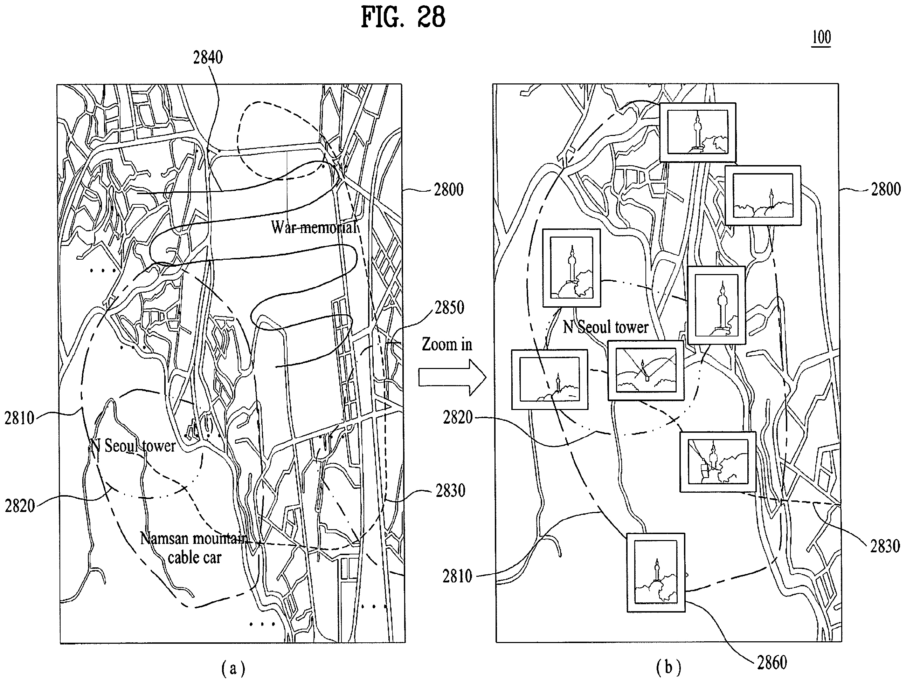

In the following, examples of a method for the mobile terminal 100 to provide a search result of images captured by the drone 500 to a user is explained with reference to FIG. 28 to FIG. 32. FIG. 28 is a diagram illustrating explaining an example of a method for a mobile terminal to provide a search result of images captured by a drone according to one embodiment of the present invention.

A user accesses an external server using the mobile terminal 100 and may be then able to search for images captured by the drone 500 in a specific region or a specific range among images uploaded to the external server. For instance, the user executes a specific application installed in the mobile terminal 100 and can search for images captured by the drone 500 in the specific region or the specific range via an execution screen of the specific application.

If a search word for searching for the images captured by the drone 500 in the specific region or the specific range is input, the external server can provide a search result including the images captured in the specific region or the specific range to the user among images uploaded to the external server. In this instance, the external server can provide the search result on a map screen corresponding to the specific region or the specific range.

The controller 180 of the mobile terminal 100 can output a map screen 2800 including the search result of the images captured by the drone 500 in the specific region or the specific range among the images uploaded to the external server on the display unit 151. The map screen 2800 can include an indicator indicating at least a part of capturing information of the images captured by the drone 500 in the specific region or the specific range. A user can change a range of a region included in the map screen 2800, i.e., a scale of a map, by zoom in or zoom out the map screen 2800. Depending on embodiment, the map screen 2800 can include an indicator respectively indicating at least a part of capturing information corresponding to each of a plurality of flight paths.

The indicator can include at least one of a graphic indicating a trajectory of each flight path of the drone 500, an image of an image data corresponding to each capturing information, a text indicating at least a part of each capturing information and a graphic indicating a movement of the camera 540 of the drone 500.

A type of the indicator, the number of indicator and the like displayed on the map screen 2800 can be determined based on a scale of the map screen 2800. As an example, referring to FIG. 28 (a), if a range of a region included in the map screen 2800 is wide (if a scale of a map is less than a predetermined scale), graphics 2810/2820/2830/2840 indicating trajectories of flight paths of the drone 500 corresponding to regions included in the map screen 2800 can be displayed on the map screen 2800 displayed on the display unit 151.

On the contrary, referring to FIG. 28 (b), if a range of a region included in the map screen 2800 is narrower than the range shown in FIG. 28 (a) (if a scale of a map is greater than a predetermined scale), images 2860 of image data corresponding to each capturing information as well as graphics 2810/2820/2830/2840 indicating trajectories of flight paths of the drone 500 corresponding to regions included in the map screen 2800 can be displayed on the map screen 2800 displayed on the display unit 151. If a zoom-in command is detected on the map screen 2800 shown in FIG. 28 (a), as shown in FIG. 28 (b), the controller 180 can output the map screen 2800 including a narrower region on the display unit 151. On the contrary, if a zoom-out command is detected on the map screen 2800 shown in FIG. 28 (b), as shown in FIG. 28 (a), the controller 180 can output the map screen 2800 including a wider region on the display unit 151.

A user can check capturing information of each image corresponding to a region included in the map screen 2800, which is displayed on the display unit 151, by zoom in or zoom out the map screen 2800. For instance, if the user zooms in the map screen 2800, it can check capturing information of each image in detail. If the user zooms out the map screen 2800, it can roughly check capturing information of a plurality of images.

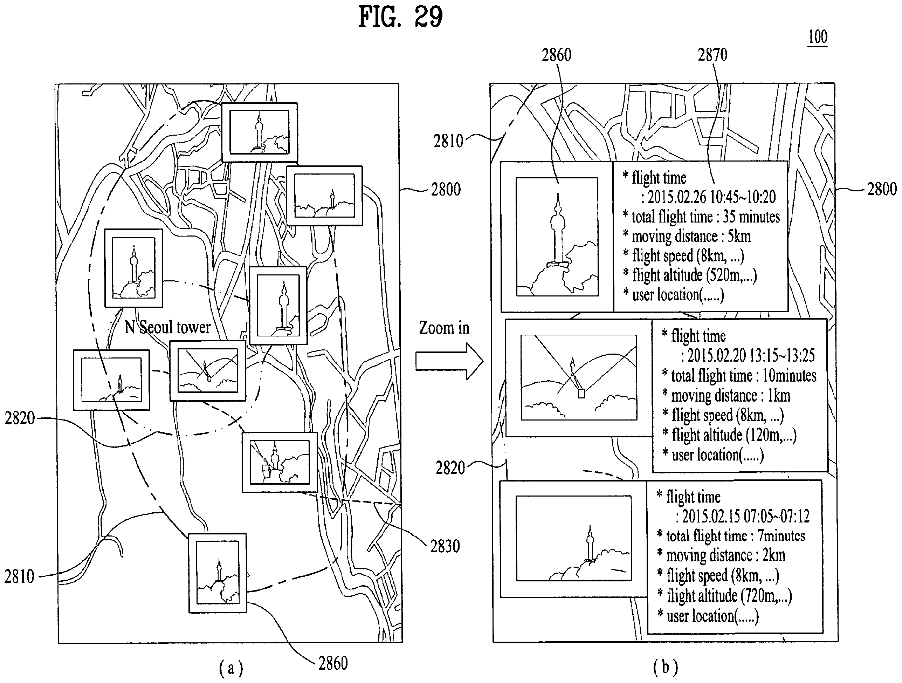

FIG. 29 is a diagram illustrating explaining an example of a method for a mobile terminal to provide a search result of images captured by a drone according to one embodiment of the present invention. Explanation on contents overlapped with what is mentioned earlier with reference to FIG. 28 is omitted at this time.

The controller 180 of the mobile terminal 100 can output a map screen 2800 including a search result of the images captured by the drone 500 in the specific region or the specific range among the images uploaded to the external server on the display unit 151. The map screen 2800 can include an indicator indicating at least a part of capturing information of the images captured by the drone 500 in the specific region or the specific range.

Referring to FIG. 29 (a), the indicator displayed on the map screen 2800 can include graphics 2810/2820/2830/2840 indicating trajectories of flight paths of the drone 500 corresponding to regions included in the map screen 2800 and images 2820 of image data respectively corresponding to capturing information. If a zoom-in command is detected on the map screen 2800, as shown in FIG. 29 (b), the controller 180 can output the map screen 2800 including a range narrower than the region included in the map screen 2800 shown in FIG. 29 (a) on the display unit 151.

Referring to FIG. 29 (b), it can check that the map screen 2800 of a scale greater than a scale of the map screen 2800 shown in FIG. 29 (a) is displayed on the display unit 151. Hence, at least one of a type of an indicator and the number of indicators displayed on the map screen 2800 may vary. For instance, graphics 2810/2820 indicating trajectories of flight paths of the drone 500 corresponding to regions included in the map screen 2800, images 2860 of image data respectively corresponding to capturing information and a text 2870 respectively indicating at least a part of capturing information can be displayed on the map screen 2800 shown in FIG. 29 (b).

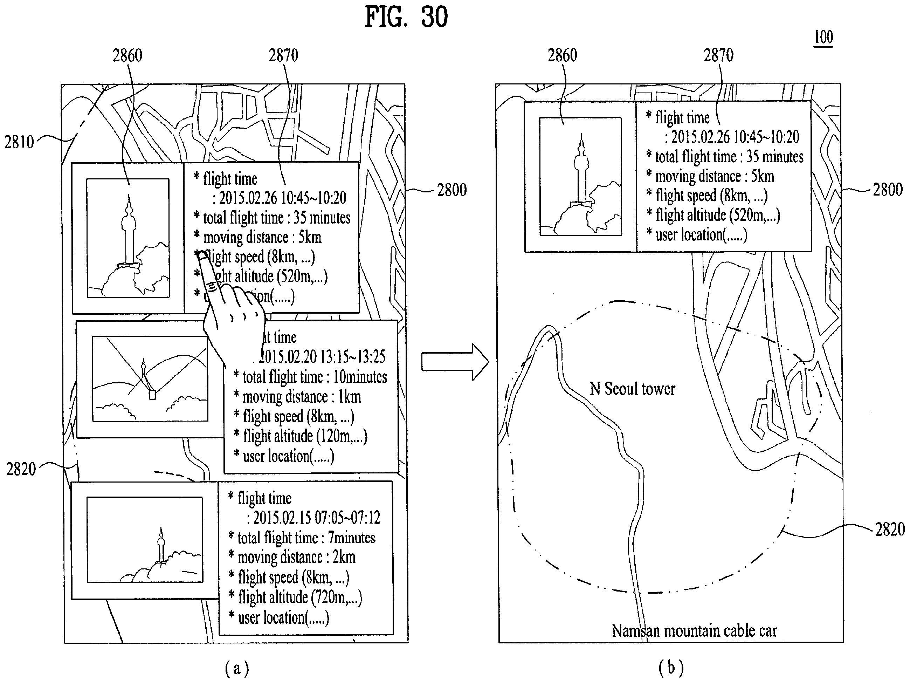

FIG. 30 is a diagram illustrating explaining an example of a method for a mobile terminal to provide a search result of images captured by a drone according to one embodiment of the present invention. Explanation on contents overlapped with what is mentioned earlier with reference to FIG. 28 and FIG. 29 is omitted at this time.

The controller 180 of the mobile terminal 100 can output a map screen 2800 including a search result of the images captured by the drone 500 in the specific region or the specific range among the images uploaded to the external server on the display unit 151. The map screen 2800 can include an indicator indicating at least a part of capturing information of the images captured by the drone 500 in the specific region or the specific range.

Referring to FIG. 30 (a), the indicator displayed on the map screen 2800 can include graphics 2810/2820 indicating trajectories of flight paths of the drone 500 corresponding to regions included in the map screen 2800, images 2860 of image data respectively corresponding to capturing information and a text 2870 respectively corresponding to at least a part of the capturing information.

If a command for selecting one indicator from among indicators displayed on the map screen 2800 is detected, the controller 180 deletes at least a part of the indicators displayed on the map screen 2800 or change a position of at least a part of the indicators displayed on the map screen 2800.

For instance, the controller 180 can enable at least a part of the indicators indicating capturing information corresponding to a flight path except a first flight path to be disappeared from the map screen 2800 according to a command for selecting a text 2870 indicating at least a part of capturing information of images captured on the first flight path among indicators displayed on the map screen 2800. And, in order to completely display a graphic 2820 corresponding to a trajectory of the first flight path on the map screen 2800, the controller 180 can change a position of an indicator corresponding to the rest of the first flight path except the graphic 2820 on the map screen 2820.

In addition, a user may select a specific indicator from the map screen 2800 shown in FIG. 29 (a) and (b). If a command for selecting a specific indicator from the map screen 2800 shown in FIG. 29 (a) and FIG. 29 (b) is detected, similar to what is shown in FIG. 30 (b), the controller 180 outputs the map screen shown in FIG. 29 (a) or FIG. 29 (b) on the display unit 151 by performing zoom-in on the map screen and can display details of capturing information of an image corresponding to the selected indicator.

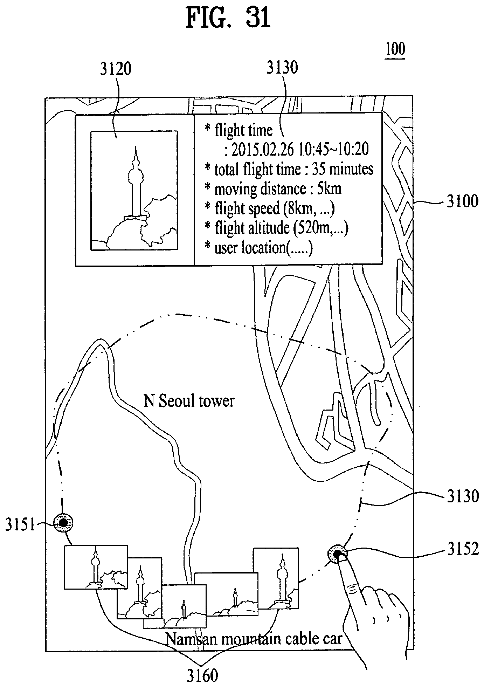

FIG. 31 is a diagram illustrating explaining an example of a method for a mobile terminal to provide a search result of images captured by a drone according to one embodiment of the present invention. Explanation on contents overlapped with what is mentioned earlier with reference to FIG. 28 to FIG. 30 is omitted at this time.

Referring to FIG. 31, a map screen 3100 including a prescribed range is output on the display unit 151. The map screen 3100 can display an indicator indicating at least a part of capturing information of an image captured on a specific flight path. For instance, the map screen 3100 includes a graphic 3110 indicating a trajectory of the specific flight path, an image 3120 of image data corresponding to the image captured on the specific flight path and a text 3130 indicating at least a part of capturing information corresponding to the image captured on the specific flight path.

The controller 180 can detect a command touching a random point of the graphic 3110 indicating the trajectory of the specific flight path. In the present embodiment, assume a case that a command touching a first point 3151 of the graphic 3110 and dragging the touch to a second point 3152 is detected. The controller 180 can output an image corresponding to an image captured on the touched point among the specific flight path on the display unit 151 according to the command touching the random point of the graphic 3110 indicating the specific flight path.

For instance, the controller 180 can control the display unit 151 to display images 3160 corresponding to images captured on a path between the first point 3151 and the second point 3152 among the specific flight path on the graphic 3110 according to the command touching the first point 3151 of the graphic 3110 and dragging the touch to the second point 3152. According to the present embodiment, a user can appreciate an image captured on a preferred point among the specific flight path in a preview form.

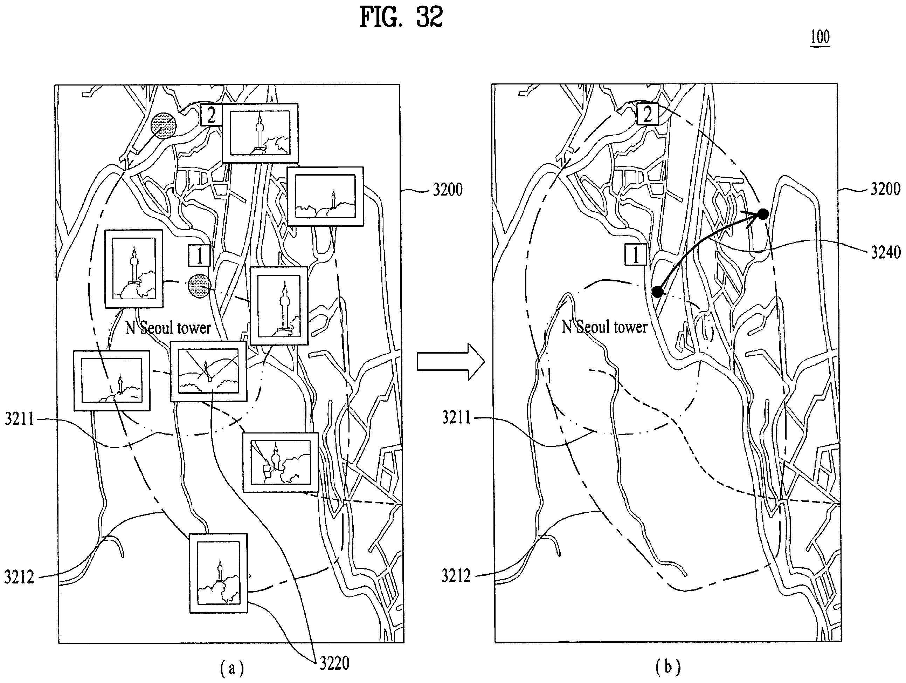

FIG. 32 is a diagram illustrating explaining an example of a method for a mobile terminal to provide a search result of images captured by a drone according to one embodiment of the present invention. The controller 180 of the mobile terminal 100 can display a map screen 3200 including a search result of images captured by the drone 500 in the specific region or the specific range among images uploaded to an external server on the display unit 151. The map screen 3200 can include an indicator indicating at least a part of capturing information of the images captured by the drone 500 in the specific region or the specific range. The indicator can include a graphic indicating a trajectory of a flight path of the drone 500 respectively corresponding to a region included in the map screen 3200, images of image data respectively corresponding to the capturing information and a text indicating at least a part of the capturing information.

As an example, referring to FIG. 32 (a), the indicator displayed on the map screen 3200 can include graphics 3211/3212 respectively indicating trajectories of the flight paths of the drone 500 and images 3220 of the image data respectively corresponding to the capturing information. A user can select two or more flight paths using the indicators displayed on the map screen 3200. For instance, the user can select a first flight path by selecting a graphic 3211 indicating a trajectory of the first flight path from among indicators displayed on the map screen 3200 and select a second flight path by selecting a graphic 3212 indicating a trajectory of the second flight path from among indicators displayed on the map screen 3200.

If the first flight path and the second flight path are selected via the map screen 3200, the controller 180 can generate a third flight path by combining the first flight path and the second flight path with each other. The third flight path may correspond to a path enabling the drone 500 to efficiently capture images by flying the first flight path and the second flight path at a time. The controller 180 extracts information of the first flight path from capturing information of images captured on the first flight path, extracts information of the second flight path from capturing information of images captured on the second flight path and can generate the third flight path using the extracted information of the first flight path and the information of the second flight path. Depending on embodiment, the third flight path can be generated based on a service provided by the external server.

Referring to FIG. 32 (b), the controller 180 can display a graphic 3240 indicating a trajectory of the generated third flight path on the map screen 3200. In this instance, in order to make a user properly check the trajectory of the third flight path, indicators except the graphic indicating the trajectory of the flight path may not be displayed on the map screen 3200.

In the foregoing description, although the embodiments related to FIG. 28 to FIG. 32 are explained with an example for a case of outputting a search result of images uploaded to an external server, it is apparent that the embodiments are also similarly applicable to a case of searching for capturing information, which is already obtained or downloaded and stored in the memory 170 of the mobile terminal 100.

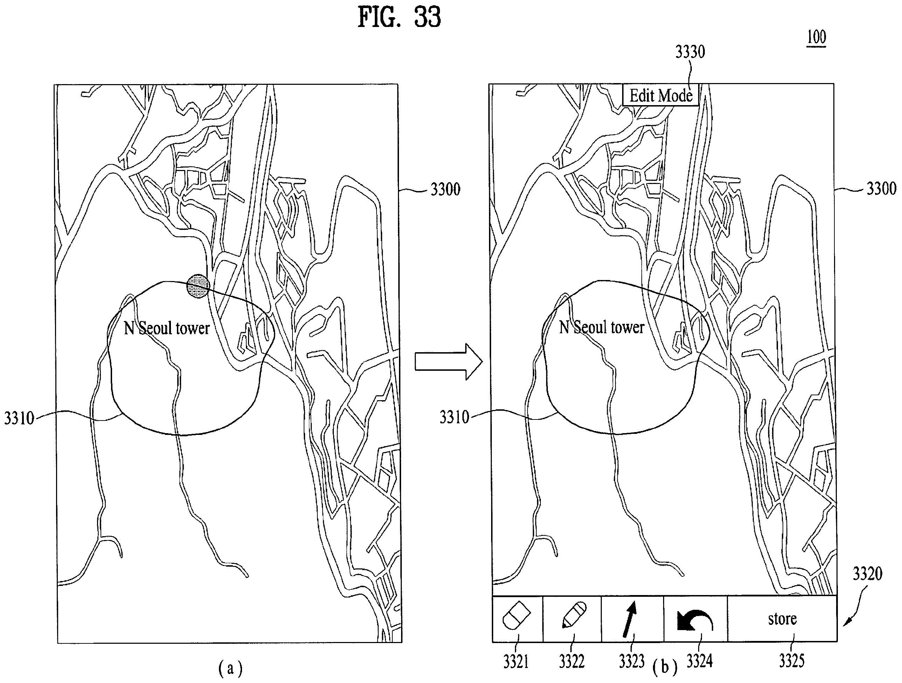

In the following, examples for a method of editing capturing information of images uploaded to an external server or capturing information stored in the memory 170 of the mobile terminal 100 are explained with reference to FIG. 33 to FIG. 37. FIG. 33 is a diagram illustrating explaining an example of a method for a mobile terminal to edit capturing information according to one embodiment of the present invention.

Referring to FIG. 33 (a), a map screen 3300 including a prescribed region is displayed on the display unit 151. The map screen 3300 can include an indicator indicating at least a part of capturing information of images captured by the drone 500 in the prescribed region. In this instance, the capturing information may correspond to capturing information of images uploaded to an external server or capturing information stored in the memory 170 of the mobile terminal 100.

In the present embodiment, the indicator included in the map screen 3300 may correspond to a graphic 3310 corresponding to a specific flight path. The controller 180 can detect a command for editing (changing) capturing information of an image corresponding to the flight path. As an example, the command for editing the capturing information may correspond to a command touching one of indicators displayed on the map screen 3300 for more than a prescribed time.

Referring to FIG. 33 (b), the controller 180 can output a GUI 3320 for editing the capturing information on the display unit 151 according to the command for editing the capturing information of the image corresponding to the flight path. The GUI 3320 can be displayed on the map screen 3300 shown in FIG. 33 (a). As an example, the GUI 3320 can include a first menu option 3321 configured to delete a flight path, a second menu option 3322 configured to add a flight path, a third menu option 3323 configured to modify a moving direction of the camera 540 of the drone 500, a fourth menu option 3324 configured to return to a state prior to editing and a fifth menu option configured to store edited capturing information.

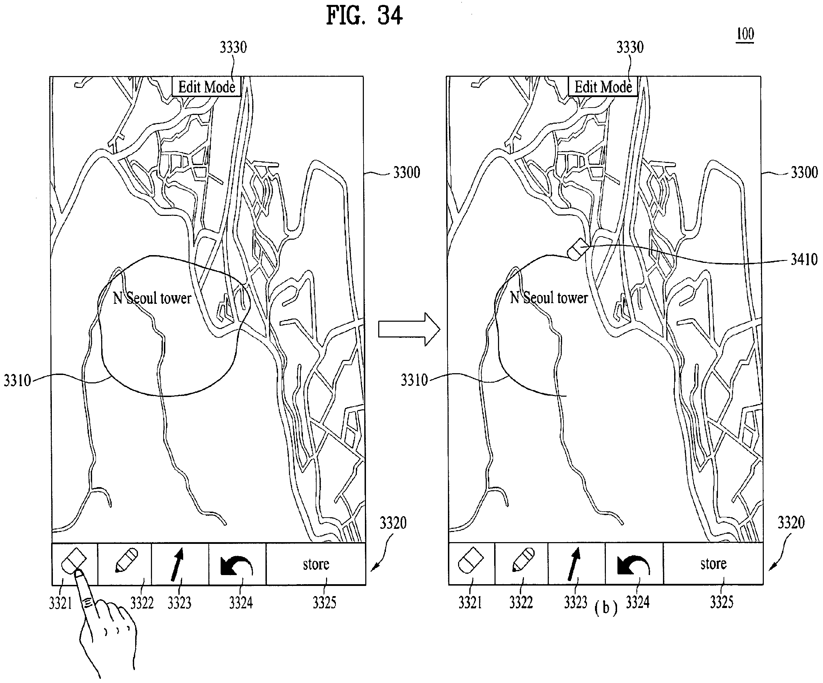

Depending on embodiment, the controller 180 can display information 3330 on the map screen 3300 to indicate that a current mode corresponds to an editing mode of capturing information. FIG. 34 is a diagram illustrating explaining an example of a method for a mobile terminal to edit capturing information according to one embodiment of the present invention. Explanation on contents overlapped with what is mentioned earlier with reference to FIG. 33 is omitted at this time.

Referring to FIG. 34 (a), a screen of an editing mode capable of editing capturing information included in the map screen 3300 is displayed on the display unit 151. The controller 180 can display a GUI 3320 for editing capturing information on the display unit 151 according to a command for editing the capturing information displayed on the map screen 3300. In the present embodiment, a case of selecting a first menu option 3321 selected by a user from the GUI 3320 to delete a flight path is explained as an example.

Referring to FIG. 34 (b), the controller 180 can output a first indicator 3410 corresponding to a function of deleting a flight path on the map screen 3300 according to a command of selecting the first menu option 3321 from the GUI 3320. If a user lets the first indicator 3410 go by points on a graphic 3310 corresponding to a trajectory of a flight path displayed on the map screen 3300, a flight path corresponding to a part of the graphic 3310 by which the first indicator 3410 is gone can be deleted.

The controller 180 can make the part of the graphic 3310 to be disappeared from the map screen 3300 according to a signal generated when the first indicator 3410 goes by the points on the graphic 3310. And, the controller 180 can temporarily store capturing information corresponding to a trajectory of a flight path modified by the first indicator 3410 in the memory 170.

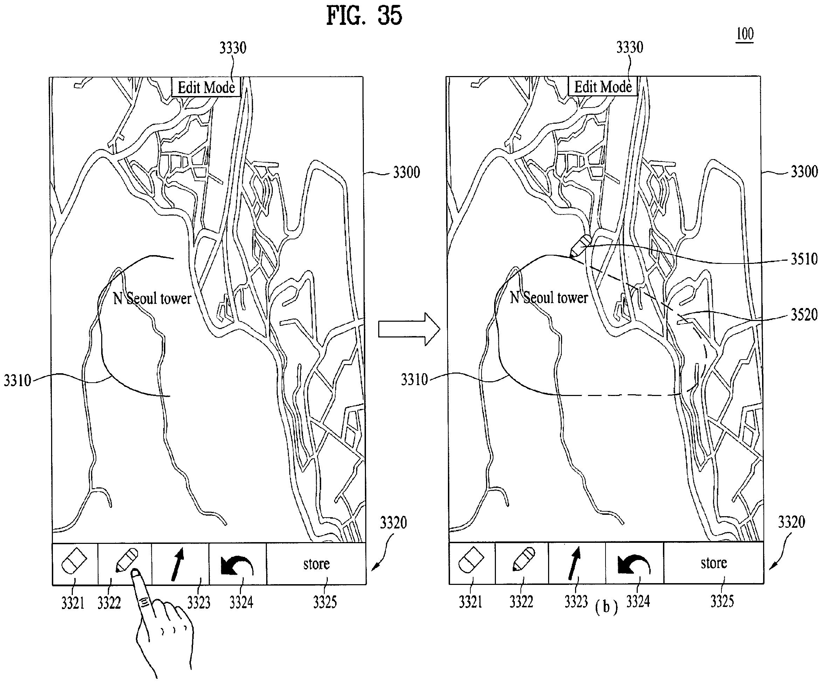

FIG. 35 is a diagram illustrating explaining an example of a method for a mobile terminal to edit capturing information according to one embodiment of the present invention. Explanation on contents overlapped with what is mentioned earlier with reference to FIG. 33 is omitted at this time. Assume that embodiment of FIG. 35 is performed after the embodiment of FIG. 34 is performed.

Referring to FIG. 35 (a), a graphic 3310 corresponding to a trajectory of a flight path of after the trajectory of the flight path is deleted according to what is mentioned earlier with reference to FIG. 34 is displayed on the map screen 3300. In the present embodiment, a case of selecting a second menu option 3322 selected from the GUI 3320 by a user to add a flight path is explained for example.

Referring to FIG. 35 (b), the controller 180 can output a second indicator 3510 corresponding to a function of adding a flight path on the map screen 3300 according to a command of selecting the second menu option 3322 from the GUI 3320. If a user lets the second indicator 3510 go by random points on the map screen 3300, a flight path corresponding to a position by which the first indicator 3410 is gone can be added.

The controller 180 can display a graphic 3520 corresponding to a trajectory of an added flight path on the position by which the second indicator 3510 is gone on the map screen 3300 according to a signal generated when the second indicator 3510 goes by the random points on the map screen 3300. In order to make the user visually distinguish a legacy flight path from a newly added flight path, the graphic 3310 and the graphic 3520 can be differentiated from each other in at least one of a form, a shape, thickness, a pattern, color, and transparency. And, the controller 180 generates capturing information corresponding to a trajectory of a flight path added by the second indicator 3510 and can temporarily store the generated capturing information in the memory 170.

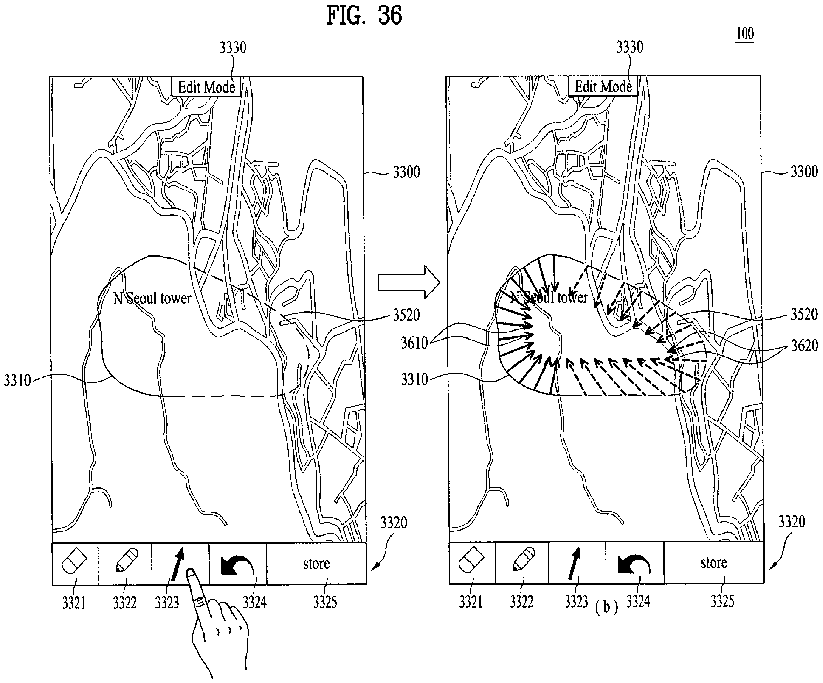

FIG. 36 is a diagram illustrating explaining an example of a method for a mobile terminal to edit capturing information according to one embodiment of the present invention. Explanation on contents overlapped with what is mentioned earlier in FIG. 33 is omitted at this time. Assume that embodiment of FIG. 36 is performed after the embodiment of FIG. 35 is performed.

Referring to FIG. 36 (a), a graphic 3310/3520 corresponding to a trajectory of a flight path of after the trajectory of the flight path is added according to what is mentioned earlier with reference to FIG. 35 is displayed on the map screen 3300. In the present embodiment, a case of selecting a third menu option 3323 selected from the GUI 3320 by a user to modify a moving direction of the camera 540 of the drone 500 is explained for example.

Referring to FIG. 36 (b), when a corresponding image is captured, the controller 180 can output a graphic 3610 indicating a movement of the camera 540 on the map screen 3300 according to a command of selecting the third menu option 3323 from the GUI 3320. The graphic 3610 can be configured to reflect a movement of the camera 540 in response to a part of a graphic 3310 of a flight path not deleted by a user. Depending on embodiment, each length of the graphic 3310 can be determined to reflect a distance between a position captured by the camera 540 and the camera 540. For instance, if the position captured by the camera 540 is getting closer to the camera 540, length of the graphic 3310 is getting shorter. On the contrary, if the position captured by the camera 540 is getting far from the camera 540, length of the graphic 3310 is getting longer.

A user can add, delete and modify a preferred movement (capturing direction) of the camera 540. As an example, the user can add the preferred movement of the camera 540 by touching and dragging a screen of the display unit 151 according to a graphic 3520 corresponding to a trajectory of the added flight path.

The controller 180 can add a graphic 3620 indicating the added movement of the camera 540 to the map screen 3300 according to a signal generated when the preferred movement of the camera 540 is added by the user. In order to make the user visually distinguish a legacy movement of the camera 540 from a modified (changed, added) movement of the camera 540, the graphic 3610 and the graphic 3620 can be differentiated from each other in at least one of a form, a shape, thickness, a pattern, color, and transparency.

In addition, a user can modify a movement of the camera of a corresponding position by modifying a shape, a length, a form and the like of the graphic 3610. And, the controller 180 generates capturing information corresponding to the added movement of the camera 540 and may be then able to temporarily store the generated capturing information in the memory 170.

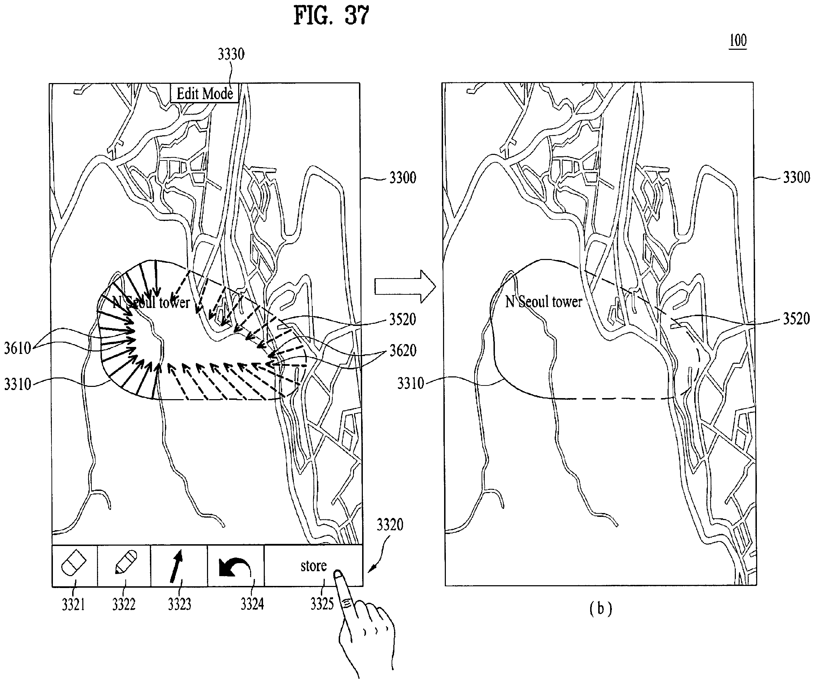

FIG. 37 is a diagram illustrating explaining an example of a method for a mobile terminal to edit capturing information according to one embodiment of the present invention. Explanation on contents overlapped with what is mentioned earlier in FIG. 33 is omitted at this time. Assume that embodiment of FIG. 37 is performed after the embodiment of FIG. 36 is performed.

Referring to FIG. 37 (a), a graphic 3310/3520 corresponding to a trajectory of a flight path and a graphic 3610/3620 corresponding to a movement of the camera 540 are displayed on the map screen 3300 after the movement of the camera 540 is added according to what is mentioned earlier with reference to FIG. 36. In the present embodiment, a case of selecting a fifth menu option 3325 selected from the GUI 3320 by a user to store edited capturing information is explained for example.

Referring to FIG. 37 (b), the controller 180 cancels a mode for editing capturing information according to a command of selecting the fifth menu option 3325 from the GUI 3320 and may be then able to make the GUI 3320 to be disappeared from the display unit 151. And, the controller 180 can store capturing information modified in the mode for editing the capturing information in the memory 170. For instance, if a part of capturing information is deleted in the mode for editing the capturing information, the controller 180 can delete the part of the capturing information from the memory 170.

Depending on embodiment, if a user performs editing on capturing information before downloading the capturing information of a specific image to the mobile terminal 100, in particular, if the user performs editing on the capturing information of the specific image uploaded to an external server, the external server can store the capturing information modified in the mode for editing the capturing information. And, the controller 180 downloads capturing information modified in the editing mode and capturing information not modified in the editing mode from the external server and can store the capturing information in the memory 170.

And, depending on embodiment, if a user directly captures an image using the drone 500 and performs editing on capturing information of the captured image, the controller 180 can store capturing information modified in the editing mode and capturing information not modified in the editing mode in the memory 170.

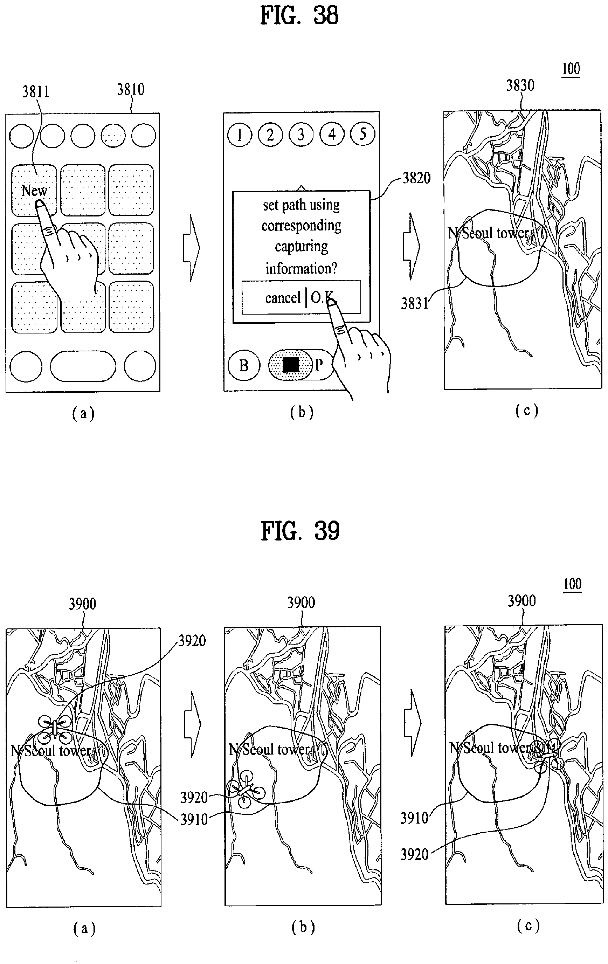

In the following, examples for a method of controlling the drone 500 based on capturing information stored in the memory 170 of the mobile terminal 100 are explained with reference to FIG. 38 to FIG. 40. FIG. 38 is a diagram illustrating explaining an example of a method for a mobile terminal to control a drone based on capturing information stored in a memory according to one embodiment of the present invention.

Referring to FIG. 38 (a), the controller 180 of the mobile terminal 100 executes an application related to the drone 500 and can output an execution screen 3810 on the display unit 151. The execution screen 3810 includes a list of capturing information stored in the memory 170. In the present embodiment, assume that a user selects a menu option 3811 corresponding to capturing information most recently stored in the memory 170 from the capturing information stored in the memory 170.

Referring to FIG. 38 (b), the controller 180 can display a message 3820 checking whether to configure a flight path and a capturing path of the drone 500 using the capturing information on the display unit 151 according to a command of selecting the menu option 3811. And, if a command for selecting a confirmation menu included in the message 3820 is detected, the controller 180 can configure the flight path and the capturing path of the drone 500, which is connected with the mobile terminal 100 in wireless communication, using the capturing information.

Depending on embodiment, referring to FIG. 38 (c), the controller 180 can display a preview screen 3830 on the display unit 151 according to a command for selecting the confirmation menu included in the message 3820 to enable a user to check the flight path and the capturing path of the drone 500 to be configured using the capturing information in advance. For instance, the preview screen 3830 may correspond to a map screen including a region corresponding to the capturing information. And, the preview screen 3830 may include an indicator 3831 indicating a trajectory of a flight path of the drone 500, which is anticipated according to the configuration of the flight and the capturing path of the drone 500.

FIG. 39 is a diagram illustrating an example of the preview screen shown in FIG. 38. The controller 180 of the mobile terminal 100 can display a preview screen 3900 on the display unit 151 to enable a user to check a flight path and a capturing path of the drone 500 to be configured using specific capturing information in advance. For instance, the preview screen 3900 can include a first indicator 3910 indicating a trajectory of a flight path of the drone 500 which is anticipated according to the configuration of the flight path and the capturing path of the drone 500.

And, the controller 180 can display a second indicator 3920 indicating a flying direction and a capturing direction of the drone 500 in accordance with the first indicator 3910 to enable a user to intuitively check a movement (capturing direction) of the camera 540 which is anticipated according to the configuration of the flight path and the capturing path of the drone 500. For instance, like a flow shown in FIG. 39 (a) to (c), the controller 180 can configure the preview screen 3900 as a dynamic screen moving according to an anticipated flow of the flight path and the capturing path of the drone 500. In this instance, the preview screen 3900 can be configured as the second indicator 3920 is moving on the first indicator 3910.

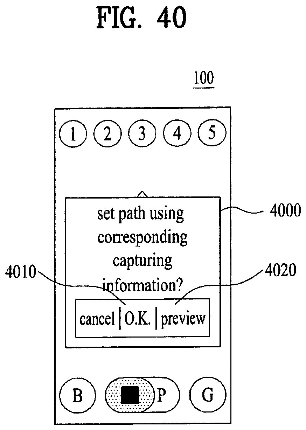

FIG. 40 is a diagram illustrating explaining an example of a message output on a mobile terminal in accordance with a command for configuring a path of a drone according to one embodiment of the present invention. The controller 180 of the mobile terminal 100 can display a message 4020 shown in FIG. 40 on the display unit 151 using specific capturing information stored in the memory 170 according to a command for configuring a flight path and a capturing path of the drone 500.

The message 4020 can include a confirmation message 4010 and a preview menu 4020. The controller 180 can configure the flight path and the capturing path of the drone 500, which is connected with the mobile terminal in wireless communication, using capturing information selected by a user according to a command for selecting the confirmation menu 4010 included in the message 4020. Or, the controller 180 can output the preview screen mentioned earlier with reference to FIG. 38 (c) or FIG. 39 according to a command for selecting the preview menu 4020 included in the message 4020.

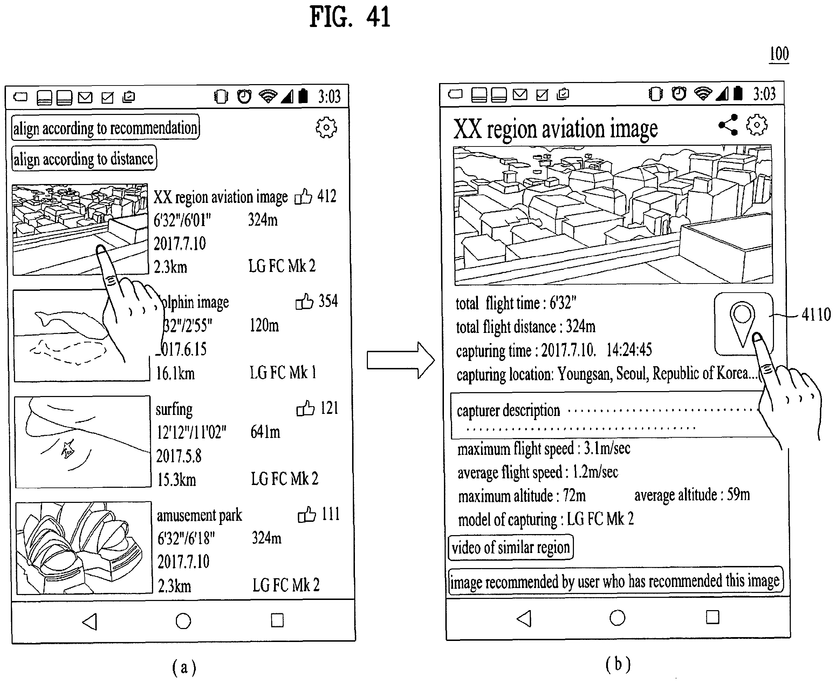

In the following, a different method of providing a search result of images to a user is explained with reference to FIG. 41 to FIG. 43 when the user searches for images captured by the drone 500 in a specific region or a specific range among images uploaded to an external server.

FIG. 41 to FIG. 42 are diagrams illustrating explaining an example of a different method for a mobile terminal to provide a search result of an image captured by a drone according to one embodiment of the present invention. Referring to FIG. 41 (a), an external server can provide a user with a list of images most recently uploaded, a list of recommended images, a list of images listed according to an order of images captured in a short distance based on current location information of the mobile terminal 100, a list of images captured in a specific region or a specific range and the like.

If an application related to the external server is executed, the controller 180 of the mobile terminal 100 can display an execution screen including at least one of the list of images most recently uploaded, the list of recommended images, the list of images listed according to an order of images captured in a short distance based on current location information of the mobile terminal 100, and the list of images captured in a specific region or a specific range on the display unit 151.

Depending on embodiment, the execution screen including a list of images can include information on a title of each image, total capturing time of each image, flight time of the drone 500 corresponding to each image, flight distance of the drone 500 corresponding to each image, capturing date of each image, a distance between a current location of the mobile terminal 100 and a location at which each image is captured, a model of the drone 500, the number of recommend of each image and the like.

Referring to FIG. 41 (b), if a specific image is selected from the images included in the list, the external server can provide a user with a detail screen corresponding to image data and capturing information of the selected specific image. The controller 180 of the mobile terminal 100 can display the detail screen corresponding to the image data and the capturing information of the selected specific image on the display unit 151 according to a command of selecting the specific image from the images included in the list.

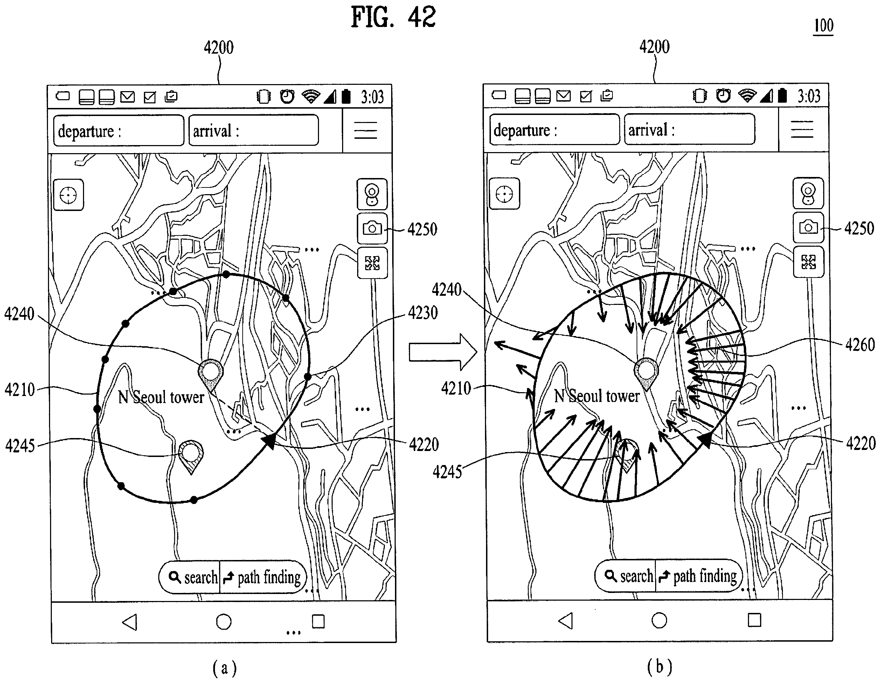

If a specific menu 4110 is selected from the detail screen corresponding to the image data and the capturing information of the specific image, as shown in FIG. 42 (a), the external server can provide a user with a map screen including a region at which the specific image is captured. The specific menu 4111 may correspond to a menu configured to check at least a part of capturing information of the specific image via the map screen including the region.

The controller 180 of the mobile terminal 100 can display the map screen 4200 including the region at which the specific image is captured on the display unit 151 according to a command of selecting the specific menu 4111 from the detail screen corresponding to the image data and the capturing information of the specific image.

The map screen 4200 can include an indicator indicating at least a part of the capturing information of the specific image. For instance, the map screen 4200 can include at least one of a first indicator 4210 indicating a trajectory of a flight path corresponding to the specific image, a second indicator 4220 indicating a start point (or start point of capturing) of a flight corresponding to the specific image and a flight direction (or capturing direction), a third indicator 4230 indicating flight speed (or capturing speed) indicated by dividing capturing time of the specific image by a predetermined section and a fourth indicator 4240 indicating a location of the mobile terminal 100 (or a location of a beacon) when the specific image is captured. Depending on embodiment, thickness and/or color of the first indicator 4210 can be determined based on flight speed (or capturing speed) of the drone 500 by which the specific image is captured.

And, the map screen 4200 can further include a fifth indicator 4245 indicating a location of the mobile terminal 100 (or, a location of a user) currently displaying the map screen 4200. Depending on embodiment, if a menu 4250 for checking information on a movement of the camera 540 of the drone 500 is selected from the map screen 4200, as shown in FIG. 42 (b), the controller 180 can display a sixth indicator 4260 indicating the movement of the camera 540 of the drone 500 on the map screen 4200.

Depending on embodiment, the sixth indicator 4260 can indicate information on horizontal orientation and vertical orientation of the camera 540. For instance, a length of the sixth indicator 4260 is getting shorter as a distance between a region captured by the camera 540 and a location of the camera 540 is getting closer. The length of the sixth indicator 4260 is getting longer as the distance between the region captured by the camera 540 and the location of the camera 540 is increasing.

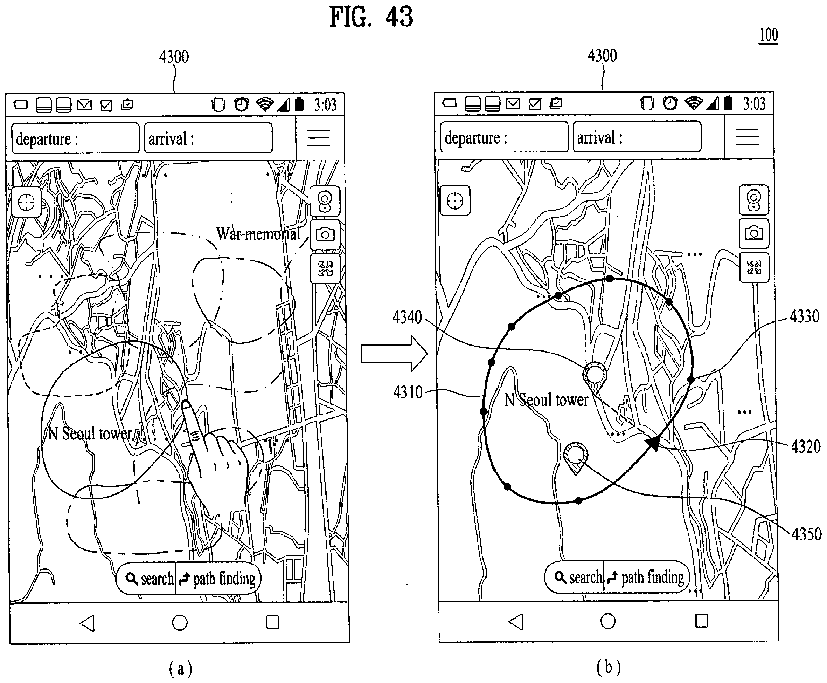

FIG. 43 is a diagram illustrating explaining a different example of a different method for a mobile terminal to provide a search result of an image captured by a drone according to one embodiment of the present invention. Referring to FIG. 43 (a), an external server can provide a user with a map screen including a search result of images captured in a specific region or a specific range.

The controller 180 of the mobile terminal 100 can display a map screen 4300 including a search result of images captured in a specific region or a specific range on the display unit 151 as an application related to the external server is executed. The map screen 4300 can include an indicator indicating at least a part of capturing information of each image captured in the specific region or the specific range. For instance, the map screen 4300 can include an indicator indicating a trajectory of a flight path of each image captured in the specific region or the specific range. Since explanation on the information displayed on the map screen 4300 is similar to what is mentioned earlier with reference to FIG. 28 to FIG. 31 and FIG. 42, detail explanation on the information is omitted at this time.

If an indicator indicating capturing information of a specific image is selected from the map screen 4300, as shown in FIG. 43 (b), the controller 180 can display more detail information on the capturing information of the specific image corresponding to the selected indicator on the map screen 4300. For instance, the map screen 4300 can include at least one of a first indicator 4310 indicating a trajectory of a flight path corresponding to the specific image, a second indicator 4320 indicating a start point (or start point of capturing) of a flight corresponding to the specific image and a flight direction (or capturing direction), a third indicator 4330 indicating flight speed (or capturing speed) indicated by dividing capturing time of the specific image by a predetermined section and a fourth indicator 4340 indicating a location of the mobile terminal 100 (or a location of a beacon) when the specific image is captured. Depending on embodiment, thickness and/or color of the first indicator 4310 can be determined based on flight speed (or capturing speed) of the drone 500 by which the specific image is captured.

And, the map screen 4300 can further include a fifth indicator 4345 indicating a location of the mobile terminal 100 (or, a location of a user) currently displaying the map screen 4300. According to the aforementioned embodiments, in case of capturing an image using the drone 500, it can provide a user with the mobile terminal 100 enabling the user to collect and utilize capturing information related to image capturing and a method of controlling therefor. And, it may also be able to provide the user with the mobile terminal 100 providing optimized UX/UI necessary for sharing the collected capturing information and a method of controlling therefor. The present invention mentioned in the foregoing description may be implemented using a machine-readable medium having instructions stored thereon for execution by a processor to perform various methods presented herein. Examples of possible machine-readable mediums include HDD (Hard Disk Drive), SSD (Solid State Disk), SDD (Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal. The foregoing embodiments are merely exemplary and are not to be considered as limiting the present disclosure. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. A mobile terminal, comprising:
a wireless communication unit (110) configured to transceive data with a drone (500) via wireless communication;
a display unit (151);
a memory (170) configured to store data received from the drone, the data including image data captured by a camera (540) of the drone (500);
a location information collecting unit (115) configured to collect location information of the mobile terminal; and
a controller (180) configured to:
control the wireless communication unit (110) to receive the image data captured by the camera (540) of the drone (500) and sensing data corresponding to the drone and the camera of the drone, and
obtain capturing information corresponding to the received image data, the capturing information including flight information corresponding to a flight path of the drone and camera motion information corresponding to a motion of the camera of the drone based on the collected location information of the mobile terminal and the received sensing data.

2. The mobile terminal of claim 1, wherein the flight information comprises at least one of flight speed information of the drone, flight time information of the drone, absolute location information of the drone, and relative location information of the drone in relation to the location information of the mobile terminal, and
wherein the camera motion information comprises at least one of absolute direction information of the camera of the drone and relative direction information of the camera of the drone in relation to the location information of the mobile terminal.

3. The mobile terminal of claims 1 or 2, wherein the controller is further configured to:
output a message for checking whether to store the capturing information after capturing using the drone is terminated, and
if storing of the capturing information is selected via the output message, store the capturing information in the memory.

4. The mobile terminal of any one of claims 1-3, wherein the controller is further configured to:
display a GUI on the display unit for selecting a range of storing the capturing information after capturing using the drone is terminated,
detect a command for selecting storage of capturing information corresponding to an image data of a specific section among the captured image data via the GUI, and
store the capturing information corresponding to the image data of the specific section in the memory according to the detected command.

5. The mobile terminal of any one of claims 1-4, wherein the controller is further configured to:
detect a command for sharing the capturing information with an external device or an external server, and
control the wireless communication unit to transmit the capturing information to the external device or the external server according to the detected command.

6. The mobile terminal of claim 5, wherein the controller is further configured to:
control the wireless communication unit to transmit only the capturing information to the external device or the external server among the image data and the capturing information or transmit both the capturing information and the image data to the external device or the external server according to a predetermined condition.

7. The mobile terminal of claim 5, wherein the controller is further configured to:
output a message for selecting whether to permit the external device or the external server to edit the capturing information on the display unit, when the capturing information is shared with the external device or the external server,.

8. The mobile terminal of any one of claims 1-7, wherein the controller is further configured to:
display a map screen of a predetermined range on the display unit, and
display at least one or more indicators indicating at least a part of capturing information corresponding to the displayed map screen among the obtained capturing information on the map screen.

9. The mobile terminal of claim 8, wherein the indicator comprises at least one of a graphic indicating a trajectory of the flight path of the drone, an image of image data corresponding to the capturing information, a text indicating at least a part of the capturing information and a graphic indicating the motion of the camera of the drone.

10. The mobile terminal of claim 8, wherein the controller is further configured to:
detect a command for selecting a prescribed one from among the at least one or more indicators, and
control the wireless communication unit to transmit capturing information corresponding to the selected indicator among the obtained capturing information to an external device or an external server according to the detected command.

11. The mobile terminal of any one of claims 1-10, wherein the controller is further configured to:
store the obtained capturing information in the memory,
display a GUI for editing the stored capturing information on the display unit,
detect a command for selecting capturing information corresponding to an image data of a specific section from among a whole section of the captured image data via the GUI, and
delete capturing information corresponding to an image data of a section not selected by the detected command.

12. The mobile terminal of any one of claims 1-11, wherein the controller is further configured to:
display a GUI for editing the obtained capturing information on the display unit,
detect a command for changing at least a part of the obtained capturing information via the GUI, and
store capturing information changed by the detected command and capturing information not changed by the detected command.

13. A method of controlling a mobile terminal, the method comprising:
displaying a search result of an image file corresponding to a specific region or a specific place name on a display unit, wherein the image file comprises image data captured by a drone and capturing information corresponding to the captured image data and the search result is provided by an external server;
detecting a command for selecting capturing information of a specific image file from among the displayed search result;
downloading the capturing information selected by the command from the external server; and
storing the downloaded capturing information in a memory,
wherein the capturing information comprises flight information corresponding to a flight path of the drone and camera motion information corresponding to a motion of the camera of the drone.

14. The method of claim 13, further comprising:
displaying a map screen corresponding to the specific region or the specific place name on the display unit; and
displaying at least one or more indicators indicating at least a part of the capturing information on the map screen.

15. The method of claims 13 or 14, wherein the downloading the selected capturing information from the external server comprises downloading image data corresponding to the selected capturing information together with the selected capturing information from the external server.

## Patentansprüche

1. Mobiles Endgerät, mit:
einer Drahtloskommunikationseinheit (110), die dazu eingerichtet ist, Daten mit einer Drohne (500) durch Drahtloskommunikation sendend und empfangend auszutauschen,
einer Anzeigeeinheit (151),
einem Speicher (170), der dazu eingerichtet ist, von der Drohne empfangene Daten zu speichern, wobei die Daten Bilddaten enthalten, die von einer Kamera (540) der Drohne (500) aufgenommen worden sind,
einer Positionsinformationssammeleinheit (115), die dazu eingerichtet ist, Positionsinformation des mobilen Endgeräts zu sammeln, und
einer Steuereinheit (180), die eingerichtet ist zum:
Steuern der Drahtloskommunikationseinheit (110) zum Empfangen der von der Kamera (540) der Drohne (500) aufgenommenen Bilddaten und von der Drohne und der Drohnenkamera zugehörigen Messdaten, und
Erhalten von Aufnahmeinformation, die den empfangenen Bilddaten zugehörig ist, wobei die Aufnahmeinformation einem Flugweg der Drohne entsprechende Fluginformation und einer Bewegung der Drohnenkamera entsprechende Kamerabewegungsinformation enthält, die auf der gesammelten Positionsinformation des mobilen Endgeräts und den empfangenen Messdaten basieren.

2. Mobiles Endgerät nach Anspruch 1, wobei die Fluginformation Fluggeschwindigkeitsinformation der Drohne und/oder Flugzeitinformation der Drohne und/oder Absolutpositionsinformation der Drohne und/oder relative Positionsinformation der Drohne bezüglich der Positionsinformation des mobilen Endgeräts umfasst, und
wobei die Kamerabewegungsinformation Absolutrichtungsinformation der Drohnenkamera und/oder relative Richtungsinformation der Drohnenkamera bezüglich der Positionsinformation des mobilen Endgeräts umfasst.

3. Mobiles Endgerät nach Anspruch 1 oder 2, wobei die Steuereinheit ferner eingerichtet ist zum:
Ausgeben einer Nachricht zur Abfrage, ob die Aufnahmeinformation gespeichert werden soll, nachdem ein Aufnehmen unter Verwendung der Drohne beendet ist, und
falls ein Speichern der Aufnahmeinformation durch die ausgegebene Nachricht ausgewählt ist, Speichern der Aufnahmeinformation in dem Speicher.

4. Mobiles Endgerät nach einem der Ansprüche 1 bis 3, wobei die Steuereinheit ferner eingerichtet ist zum:
Anzeigen einer graphischen Benutzeroberfläche auf der Anzeigeeinheit zum Auswählen eines Bereichs des Speicherns der Aufnahmeinformation, nachdem ein Aufnehmen unter Verwendung der Drohne beendet ist,
Erfassen eines Auswahlbefehls über die graphische Benutzeroberfläche zum Speichern von Aufnahmeinformation, die Bilddaten eines bestimmten Abschnitts unter den aufgenommenen Bilddaten zugehörig ist, und
Speichern der den Bilddaten des bestimmten Abschnitts entsprechenden Aufnahmeinformation in dem Speicher gemäß dem erfassten Befehl.

5. Mobiles Endgerät nach einem der Ansprüche 1 bis 4, wobei die Steuereinheit ferner eingerichtet ist zum:
Erfassen eines Befehls zum Teilen der Aufnahmeinformation mit einer externen Vorrichtung oder einem externen Server, und
Steuern der Drahtloskommunikationseinheit zum Senden der Aufnahmeinformation an die externe Vorrichtung oder den externen Server gemäß dem erfassten Befehl.

6. Mobiles Endgerät nach Anspruch 5, wobei die Steuereinheit ferner eingerichtet ist zum:
Steuern der Drahtloskommunikationseinheit zum Senden nur der Aufnahmeinformation aus den Bilddaten und der Aufnahmeinformation an die externe Vorrichtung oder den externen Server oder zum Senden sowohl der Aufnahmeinformation als auch der Bilddaten an die externe Vorrichtung oder den externen Server entsprechend einer vorgegebenen Bedingung.

7. Mobiles Endgerät nach Anspruch 5, wobei die Steuereinheit ferner eingerichtet ist zum:
Ausgeben einer Nachricht zum Auswählen, ob es der externen Vorrichtung oder dem externen Server gestattet werden soll, die Aufnahmeinformation auf der Anzeigeeinheit zu editieren, wenn die Aufnahmeinformation mit der externen Vorrichtung oder dem externen Server geteilt wird.

8. Mobiles Endgerät nach einem der Ansprüche 1 bis 7, wobei die Steuereinheit ferner eingerichtet ist zum:
Anzeigen eines Kartenbildschirms eines vorbestimmten Bereichs auf der Anzeigeeinheit, und
Anzeigen zumindest eines oder mehrerer Anzeiger auf dem Kartenbildschirm, der bzw. die zumindest einen Teil der dem angezeigten Kartenbildschirm zugehörigen Aufnahmeinformation aus der erhaltenen Aufnahmeinformation anzeigt bzw. anzeigen.

9. Mobiles Endgerät nach Anspruch 8, wobei der Anzeiger zumindest eines umfasst aus einer eine Trajektorie des Flugweges der Drohne anzeigenden Grafik, eines Bildes von der Aufnahmeinformation zugehörigen Bilddaten, eines zumindest einen Teil der Aufnahmeinformation angebenden Textes und einer die Bewegung der Drohnenkamera anzeigenden Grafik.

10. Mobiles Endgerät nach Anspruch 8, wobei die Steuereinheit ferner eingerichtet ist zum:
Erfassen eines Befehls zum Auswählen eines bestimmten aus dem zumindest einen oder den mehreren Anzeigern, und
Steuern der Drahtloskommunikationseinheit zum Senden von dem ausgewählten Anzeiger entsprechender Aufnahmeinformation aus der erhaltenen Aufnahmeinformation an eine externe Vorrichtung oder einen externen Server gemäß dem erfassten Befehl.

11. Mobiles Endgerät nach einem der Ansprüche 1 bis 10, wobei die Steuereinheit ferner eingerichtet ist zum:
Speichern der erhaltenen Aufnahmeinformation in dem Speicher,
Anzeigen einer graphischen Benutzeroberfläche zum Editieren der gespeicherten Aufnahmeinformation auf der Anzeigeeinheit,
Erfassen eines Befehls zum Auswählen von Aufnahmeinformation über die graphische Benutzeroberfläche, die Bilddaten eines bestimmten Abschnitts aus einem gesamten Abschnitt der aufgenommenen Bilddaten zugehörig ist, und
Löschen von Aufnahmeinformation, welche Bilddaten eines Abschnitts zugehörig ist, der nicht durch den erfassten Befehl ausgewählt ist.

12. Mobiles Endgerät nach einem der Ansprüche 1 bis 11, wobei die Steuereinheit ferner eingerichtet ist zum:
Anzeigen einer graphischen Benutzeroberfläche zum Editieren der erhaltenen Aufnahmeinformation auf der Anzeigeeinheit,
Erfassen eines Befehls zum Ändern zumindest eines Teils der erhaltenen Aufnahmeinformation über die graphische Benutzeroberfläche, und
Speichern von Aufnahmeinformation, die durch den erfassten Befehl geändert worden ist, und Aufnahmeinformation, die durch den erfassten Befehl nicht geändert worden ist.

13. Verfahren zum Steuern eines mobilen Endgeräts, wobei das Verfahren umfasst:
Anzeigen eines Suchergebnisses einer einem bestimmten Bereich oder einer bestimmten Ortsbezeichnung entsprechenden Bilddatei auf einer Anzeigeeinheit, wobei die Bilddatei von einer Drohne aufgenommene Bilddaten und den aufgenommenen Bilddaten zugehörige Aufnahmeinformation umfasst und das Suchergebnis von einem externen Server geliefert wird,
Erfassen eines Befehls zum Auswählen von Aufnahmeinformation einer bestimmten Bilddatei aus dem angezeigten Suchergebnis,
Herunterladen der durch den Befehl ausgewählten Aufnahmeinformation von dem externen Server, und
Speichern der heruntergeladenen Aufnahmeinformation in einem Speicher,
wobei die Aufnahmeinformation einem Flug der Drohne entsprechende Fluginformation und einer Bewegung der Drohnenkamera entsprechende Kamerabewegungsinformation umfasst.

14. Verfahren nach Anspruch 13, ferner umfassend:
Anzeigen eines dem bestimmten Bereich oder der bestimmten Ortsbezeichnung entsprechenden Kartenbildschirms auf der Anzeigeeinheit, und
Anzeigen zumindest eines oder mehrerer Anzeiger, welche zumindest einen Teil der Aufnahmeinformation auf dem Kartenbildschirm angeben.

15. Verfahren nach Anspruch 13 oder 14, wobei das Herunterladen der ausgewählten Aufnahmeinformation von dem externen Server ein Herunterladen von der ausgewählten Aufnahmeinformation zugehörigen Bilddaten zusammen mit der ausgewählten Aufnahmeinformation von dem externen Server umfasst.

## Revendications

1. Terminal mobile, comprenant:
une unité de communication sans fil (110) conçue pour recevoir et envoyer des données avec un drone (500) par la communication sans fil;
une unité d'affichage (151);
une mémoire (170) conçue pour mémoriser les données reçues en provenance du drone, les données comprenant des données d'image capturées par une caméra (540) du drone (500);
une unité de collecte d'informations d'emplacement (115) conçue pour collecter des informations d'emplacement du terminal mobile; et
un organe de commande (180) conçu pour:
Amener l'unité de communication sans fil (110) à recevoir les données d'image capturées par la caméra (540) du drone (500) et des données de détection correspondant au drone et à la caméra du drone, et
obtenir des informations de capture correspondant aux données d'image reçues, les informations de capture comprenant des informations de vol correspondant à une trajectoire de vol du drone et des informations de déplacement de caméra correspondant à un déplacement de la caméra du drone en fonction des informations d'emplacement collectées du terminal mobile et des données de détection reçues.

2. Terminal mobile selon la revendication 1, les informations de vol comprenant des informations de vitesse de vol du drone et/ou des informations de temps de vol et/ou des informations d'emplacement absolu du drone et/ou des informations d'emplacement relatif du drone en relation avec les informations d'emplacement du terminal mobile, et
les informations de déplacement de caméra comprenant au moins des informations de direction absolue de la caméra du drone et/ou des informations de direction relative de la caméra du drone en relation avec les informations d'emplacement du terminal mobile.

3. Terminal mobile selon la revendication 1 ou 2, l'organe de commande étant en outre configuré pour:
délivrer un message pour vérifier la mise en mémoire des informations de capture après que la capture à l'aide du drone est terminée, et
si la mise en mémoire des informations de capture est sélectionnée par l'intermédiaire du message de sortie, mettre en mémoire les informations de capture dans la mémoire.

4. Terminal mobile selon l'une quelconque des revendications 1 à 3, l'organe de commande étant en outre conçu pour:
afficher une interface utilisateur graphique sur l'unité d'affichage pour sélectionner une plage de mémoire des informations de capture après que la capture à l'aide du drone est terminée,
détecter une commande pour sélectionner la mémoire d'informations de capture correspondant à une donnée d'image d'une section spécifique parmi les données d'image capturées par l'intermédiaire de l'interface utilisateur graphique, et
mettre en mémoire les informations de capture correspondant aux données d'image de la section spécifique dans la mémoire conformément à la commande détectée.

5. Terminal mobile selon l'une quelconque des revendications 1 à 4, l'organe de commande étant en outre configuré pour:
détecter une commande pour partager les informations de capture avec un dispositif externe ou un serveur externe, et
amener l'unité de communication sans fil à transmettre les informations de capture au dispositif externe ou au serveur externe conformément à la commande détectée.

6. Terminal mobile selon la revendication 5, l'organe de commande étant en outre configuré pour:
amener l'unité de communication sans fil à transmettre uniquement les informations de capture au dispositif externe ou au serveur externe parmi les données d'image et les informations de capture ou à transmettre à la fois les informations de capture et les données d'image au dispositif externe ou au serveur externe conformément à une condition prédéfinie.

7. Terminal mobile selon la revendication 5, l'organe de commande étant en outre configuré pour:
délivrer un message pour sélectionner s'il faut permettre au dispositif externe ou au serveur externe d'éditer les informations de capture sur l'unité d'affichage, lorsque les informations de capture sont partagées avec le dispositif externe ou le serveur externe.

8. Terminal mobile selon l'une quelconque des revendications 1 à 7, l'organe de commande étant en outre configuré pour:
afficher un écran de carte d'une plage prédéfinie sur l'unité d'affichage, et
afficher au moins un indicateur indiquant au moins une partie des informations de capture correspondant à l'écran de carte affiché parmi les informations de capture obtenues sur l'écran de carte.

9. Terminal mobile selon la revendication 8, l'indicateur comprenant au moins un graphique indiquant une trajectoire de vol du drone et/ou une image de données d'image correspondant aux informations de capture et/ou un texte indiquant au moins une partie des informations de capture et/ou un graphique indiquant le déplacement de la caméra du drone.

10. Terminal mobile selon la revendication 8, l'organe de commande étant en outre configuré pour:
détecter une commande pour sélectionner un indicateur prescrit parmi ledit au moins un indicateur, et
amener l'unité de communication sans fil à transmettre les informations de capture correspondant à l'indicateur sélectionné parmi les informations de capture obtenues au dispositif externe ou au serveur externe conformément à la commande détectée.

11. Terminal mobile selon l'une quelconque des revendications 1 à 10, l'organe de commande étant en outre configuré pour:
mettre en mémoire les informations de capture obtenues dans la mémoire,
afficher une interface utilisateur graphique pour éditer les informations de captures mémorisées sur l'unité d'affichage,
détecter une commande pour sélectionner les informations de capture correspondant à une donnée d'image d'une section spécifique parmi une section entière des données d'image capturées par l'intermédiaire de l'interface utilisateur graphique, et
supprimer les informations de capture correspondant à une données d'image d'une section non sélectionnée par la commande détectée.

12. Terminal mobile selon l'une quelconque des revendications 1 à 11, l'organe de commande étant en outre configuré pour:
afficher une interface utilisateur graphique pour éditer les informations de capture obtenues sur l'unité d'affichage,
détecter une commande pour changer au moins une partie des informations de capture obtenues par l'intermédiaire de l'interface utilisateur graphique, et
mettre en mémoire les informations de capture modifiées par la commande détectée et les informations de capture non modifiées par la commande détectée.

13. Procédé de commande d'un terminal mobile, le procédé consistant à:
afficher un résultat de recherche d'un fichier image correspondant à une région spécifique ou à un nom d'endroit spécifique sur une unité d'affichage, le fichier image comprenant des données d'image capturées par un drone et des informations de capture correspondant aux données d'image capturées et le résultat de recherche étant délivré par un serveur externe;
détecter une commande pour sélectionner les informations de capture d'un fichier image spécifique parmi le résultat de recherche affiché;
télécharger les informations de capture sélectionnées par la commande à partir du serveur externe; et
mettre en mémoire les informations de capture téléchargées dans une mémoire,
les informations de capture comprenant des informations de vol correspondant à une trajectoire de vol du drone et les informations de déplacement de caméra correspondant à un déplacement de la caméra du drone.

14. Procédé selon la revendication 13, comprenant en outre:
afficher un écran de carte correspondant à la région spécifique ou au nom d'endroit spécifique sur l'unité d'affichage; et
afficher au moins un indicateur indiquant au moins une partie des informations de capture sur l'écran de carte.

15. Terminal mobile selon les revendications 13 ou 14, le téléchargement des informations de capture sélectionnées à partir du serveur externe consistant à télécharger les données d'image correspondant aux informations de capture sélectionnées ensemble avec les informations de capture sélectionnées à partir du serveur externe.
